# EUROPEAN PATENT APPLICATION

(11) **EP 4 836 504 A1**
(43) Date of publication of application: **04.11.2026**
(21) Application number: 24918133.0
(22) Date of filing: 15.10.2024
(51) Int. Cl.: H04W 24/08

(54) **COMMUNICATION METHOD AND APPARATUS**

(30) Priority: 17.01.2024 CN 202410070910
(71) Applicant: Huawei Technologies Co., Ltd., Shenzhen, Guangdong 518129 (CN)
(72) Inventor: WANG, Junfan, Shenzhen, Guangdong 518129 (CN); YAN, Xueqiang, Shenzhen, Guangdong 518129 (CN); XI, Yan, Shenzhen, Guangdong 518129 (CN); ZHAO, Mingyu, Shenzhen, Guangdong 518129 (CN); XING, Weijun, Shenzhen, Guangdong 518129 (CN)
(74) Representative: Goddar, Heinz J.
(86) International application number: PCT/CN2024/124983
(87) International publication number: WO 2025/152524

(57) **Abstract**

This application discloses a communication method and apparatus, and relates to the communication field. The method includes: obtaining sensing data, where the sensing data includes first sensing data and/or second sensing data, where the first sensing data is obtained based on a sensing signal received by a second access network element; and the second sensing data is from a first access network element, and the second sensing data is obtained based on the sensing signal sent by the second access network element; and processing the sensing data, where the first access network element and a first sensing data processing function network element belong to a first operator network, and the second access network element belongs to a second operator network. According to this application, different operator networks can share a sensing entity to obtain sensing data.

## Description

### CROSS-REFERENCE TO RELATED APPLICATIONS

This application claims priority to Chinese Patent Application No. 202410070910.0, filed on January 17, 2024 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a communication system, a transmit end may modulate electromagnetic wave signals, so that the electromagnetic waves carry source information. The electromagnetic wave signals are affected by radio environments during propagation. That is, the electromagnetic wave signals are modulated by the environment and therefore carry environment information. By analyzing the electromagnetic wave signals, a receive end can not only obtain the carried source information, but also extract sensing information that reflects characteristics of the propagation environment, so that integrated sensing and communication (integrated sensing and communication, ISAC) is possible.

Objects for obtaining sensing data in the system may be referred to as sensing entities. The sensing entities may include access network devices, terminal devices, and the like. The sensing data obtained by the sensing entities may provide data support for sensing services. A larger quantity of sensing entities or more abundant sensing entity resources may provide more sensing data for the sensing services.

### SUMMARY

This application provides a communication method and apparatus, so that different operator networks can share a sensing entity to obtain sensing data.

According to a first aspect, this application provides a communication method. The method is applied to a first sensing data processing function network element side. The method includes: obtaining sensing data, where the sensing data includes first sensing data and/or second sensing data, where the first sensing data is obtained based on a sensing signal received by a second access network element; and the second sensing data is from a first access network element, and the second sensing data is obtained based on a sensing signal sent by the second access network element; and processing the sensing data.

The first access network element and the first sensing data processing function network element belong to a first operator network, and the second access network element belongs to a second operator network.

For example, the method in the first aspect may be applied to the first sensing data processing function network element. For example, the method is performed by a communication device that is deployed with or carries the first sensing data processing function network element, or is performed by an apparatus (for example, a chip or a software module) in the communication device that is deployed with or carries the first sensing data processing function network element.

According to the communication method, different operator networks can share a sensing entity to obtain sensing data. For example, according to the communication method, the first operator network can use the second RAN network element in the second operator network as a sensing entity, to obtain the sensing data.

In a possible design, the obtaining the first sensing data includes: receiving the first sensing data sent by a second sensing data processing function network element, where the first sensing data is transmitted through a first sensing bearer between the first sensing data processing function network element and the second sensing data processing function network element. The second sensing data processing function network element belongs to the second operator network.

In a possible scenario of this design, a first SSCF network element may request the second operator network to provide a receiving sensing entity, and a second sensing entity in the second operator network may serve as the receiving sensing entity to receive the sensing signal, and obtain the sensing data based on the received sensing signal. When the second sensing entity serves as the receiving sensing entity, a sending sensing entity may be a first sensing entity in the first operator network. That is, the first sensing entity is configured to send the sensing signal, and the second sensing entity is configured to receive the sensing signal. There may be one or more second sensing entities.

In another possible scenario of this design, a first SSCF network element may request the second operator network to provide a sending sensing entity and a sensing entity. A second sensing entity in the second operator network may serve as a sending sensing entity to send a sensing signal, and also serve as a receiving sensing entity to receive a sensing signal, that is, the second sensing entity performs self-sending and self-receiving. Alternatively, some second sensing entities serve as sending sensing entities to send sensing signals, and some second sensing entities serve as receiving sensing entities to receive sensing signals. There may also be one or more second sensing entities.

In a possible design, the method further includes: receiving a first request message from a first sensing service control function network element, where the first request message indicates to request to establish the first sensing bearer; and sending a first response message to the first sensing service control function network element, where the first response message indicates that establishment of the first sensing bearer is acknowledged; and the first sensing service control function network element belongs to the first operator network.

In this design, the first sensing bearer may be established between the first SDPF and the second SDPF for transmission of the sensing data.

In a possible design, the obtaining the first sensing data includes: receiving first sensing data sent by a first user plane function network element, where the first sensing data is sent by a second user plane function network element to the first user plane function network element, the first user plane function network element belongs to the first operator network, and the second user plane function network element belongs to the second operator network.

In this design, the second RAN network element sends the first sensing data to the second UPF network element in the second operator network, the second UPF network element may send the first sensing data to the first UPF network element in the first operator network, and the first UPF network element may send the first sensing data to the first SDPF network element, to implement cross-network transmission of the first sensing data.

In a possible design, the obtaining the second sensing data includes: receiving the second sensing data from the first access network element.

In a possible scenario of this design, the first SSCF network element may request the second operator network to provide the sending sensing entity, and the second sensing entity in the second operator network may serve as the sending sensing entity to send the sensing signal. When the second sensing entity serves as the sending sensing entity, the receiving sensing entity may be the first sensing entity in the first operator network, for example, the first RAN network element. That is, the second sensing entity is configured to send the sensing signal, and the first sensing entity is configured to receive the sensing signal. The first sensing entity may obtain the sensing data based on the received sensing signal. There may also be one or more second sensing entities.

According to a second aspect, this application provides a communication apparatus. The apparatus has a function of implementing the method according to the first aspect. The function may be implemented by using hardware, or may be implemented by executing corresponding software by hardware. The hardware or the software includes one or more units or modules corresponding to the functions of the method according to the first aspect, for example, a receiving unit, a processing unit, and a sending unit.

The receiving unit is configured to obtain sensing data, where the sensing data includes first sensing data and/or second sensing data, where the first sensing data is obtained based on a sensing signal received by a second access network element; and the second sensing data is from a first access network element, and the second sensing data is obtained based on a sensing signal sent by the second access network element.

The processing unit is configured to process the sensing data.

The first access network element and the first sensing data processing function network element belong to a first operator network, and the second access network element belongs to a second operator network.

In a possible design, the receiving unit is specifically configured to receive the first sensing data sent by a second sensing data processing function network element, where the first sensing data is transmitted through a first sensing bearer between the first sensing data processing function network element and the second sensing data processing function network element. The second sensing data processing function network element belongs to the second operator network.

In a possible design, the receiving unit is further configured to receive a first request message from a first sensing service control function network element, where the first request message indicates to request to establish the first sensing bearer; and the sending unit is configured to send a first response message to the first sensing service control function network element, where the first response message indicates that establishment of the first sensing bearer is acknowledged; and the first sensing service control function network element belongs to the first operator network.

In a possible design, the receiving unit is specifically configured to receive first sensing data sent by a first user plane function network element, where the first sensing data is sent by a second user plane function network element to the first user plane function network element, the first user plane function network element belongs to the first operator network, and the second user plane function network element belongs to the second operator network.

In a possible design, the receiving unit is specifically configured to receive the second sensing data from the first access network element.

According to a third aspect, this application further provides a communication apparatus, including a processor, configured to execute computer instructions stored in a memory. When the computer instructions are executed, the apparatus is caused to perform the method according to any one of the first aspect or the possible designs of the first aspect.

According to a fourth aspect, this application further provides a communication apparatus, including a processor and an interface circuit. The processor is configured to communicate with another apparatus through the interface circuit, and perform the method according to any one of the first aspect or the possible designs of the first aspect.

For example, in the third aspect and the fourth aspect, the processor is configured to perform the method according to any one of the first aspect or the possible designs of the first aspect.

The communication apparatus according to any one of the second aspect to the fourth aspect may be used in a first sensing data processing function network element. For example, the communication apparatus according to any one of the second aspect to the fourth aspect may be a communication device that is deployed with or carries the first sensing data processing function network element, or an apparatus (for example, a chip or a software module) in the communication device that is deployed with or carries the first sensing data processing function network element.

According to a fifth aspect, this application further provides a computer-readable storage medium, including computer software instructions, also referred to as instructions. When the computer software instructions are run, the method according to any one of the first aspect or the possible designs of the first aspect is implemented. For example, when the computer software instructions are run in a communication device or an apparatus built in the communication device, the communication device is caused to implement the method according to any one of the first aspect or the possible designs of the first aspect.

It may be understood that for beneficial effects that can be achieved according to the second aspect to the fifth aspect, refer to the beneficial effects according to any one of the first aspect or the possible designs of the first aspect. Details are not described herein again.

According to a sixth aspect, this application provides a communication method. The method is applied to a second sensing data processing function network element side. The method includes: receiving first sensing data from a second access network element, where the first sensing data is obtained by the second access network element based on a received sensing signal; and sending the first sensing data to a first sensing data processing function network element, where the first sensing data processing function network element belongs to a first operator network, and the second access network element and the second sensing data processing function network element belong to a second operator network.

For example, the method in the sixth aspect may be applied to the second sensing data processing function network element. For example, the method is performed by a communication device that is deployed with or carries the second sensing data processing function network element, or is performed by an apparatus (for example, a chip or a software module) in the communication device that is deployed with or carries the second sensing data processing function network element.

According to the communication method, different operator networks can share a sensing entity to obtain sensing data. For example, according to the communication method, the first operator network can use the second RAN network element in the second operator network as a sensing entity, to obtain the sensing data.

In a possible design, the first sensing data is transmitted through a first sensing bearer between the first sensing data processing function network element and the second sensing data processing function network element.

In a possible design, the method further includes: receiving a second request message from a second sensing service control function network element, where the second request message indicates to request to establish the first sensing bearer; sending a second response message to the second sensing service control function network element, where the second response message indicates that establishment of the first sensing bearer is acknowledged; receiving a third request message from the second sensing service control function network element, where the third request message indicates to request to modify the first sensing bearer; and sending a third response message to the second sensing service control function network element, where the third response message indicates that modification of the first sensing bearer is acknowledged.

The second sensing service control function network element belongs to the second operator network.

In this design, the first sensing bearer may be established between the first SDPF and the second SDPF for transmission of the sensing data.

In a possible design, the sending the first sensing data to the first sensing data processing function network element includes: sending the first sensing data to a second user function network element, to send the first sensing data to the first sensing data processing function network element via the second user plane function network element and a first user plane function network element.

The first user plane function network element belongs to the first operator network, and the second user plane function network element belongs to the second operator network.

In this design, the second RAN network element sends the first sensing data to the second UPF network element in the second operator network, the second UPF network element may send the first sensing data to the first UPF network element in the first operator network, and the first UPF network element may send the first sensing data to the first SDPF network element, to implement cross-network transmission of the first sensing data.

According to a seventh aspect, this application provides a communication apparatus. The apparatus has a function of implementing the method according to the sixth aspect. The function may be implemented by using hardware, or may be implemented by executing corresponding software by hardware. The hardware or the software includes one or more units or modules corresponding to the functions of the method according to the sixth aspect, for example, a receiving unit and a sending unit.

The receiving unit is configured to receive first sensing data from a second access network element, where the first sensing data is obtained by the second access network element based on a received sensing signal.

The sending unit is configured to send the first sensing data to a first sensing data processing function network element.

The first sensing data processing function network element belongs to a first operator network, and the second access network element and a second sensing data processing function network element belong to a second operator network.

In a possible design, the first sensing data is transmitted through a first sensing bearer between the first sensing data processing function network element and the second sensing data processing function network element.

In a possible design, the receiving unit is further configured to receive a second request message from a second sensing service control function network element, where the second request message indicates to request to establish the first sensing bearer. The sending unit is further configured to send a second response message to the second sensing service control function network element, where the second response message indicates that establishment of the first sensing bearer is acknowledged.

The receiving unit is further configured to receive a third request message from the second sensing service control function network element, where the third request message indicates to request to modify the first sensing bearer. The sending unit is further configured to send a third response message to the second sensing service control function network element, where the third response message indicates that modification of the first sensing bearer is acknowledged.

The second sensing service control function network element belongs to the second operator network.

In a possible design, the sending unit is specifically configured to send the first sensing data to a second user function network element, to send the first sensing data to the first sensing data processing function network element via the second user plane function network element and a first user plane function network element.

The first user plane function network element belongs to the first operator network, and the second user plane function network element belongs to the second operator network.

According to an eighth aspect, this application further provides a communication apparatus, including a processor, configured to execute computer instructions stored in a memory. When the computer instructions are executed, the apparatus is caused to perform the method according to any one of the sixth aspect or the possible designs of the sixth aspect.

According to a ninth aspect, this application further provides a communication apparatus, including a processor and an interface circuit. The processor is configured to communicate with another apparatus through the interface circuit, and perform the method according to any one of the sixth aspect or the possible designs of the sixth aspect.

For example, in the eighth aspect and the ninth aspect, the processor is configured to perform the method according to any one of the sixth aspect or the possible designs of the sixth aspect.

The communication apparatus according to any one of the seventh aspect to the ninth aspect may be used in a second sensing data processing function network element. For example, the communication apparatus according to any one of the seventh aspect to the ninth aspect may be a communication device that is deployed with or carries the second sensing data processing function network element, or an apparatus (for example, a chip or a software module) in the communication device that is deployed with or carries the second sensing data processing function network element.

According to a tenth aspect, this application further provides a computer-readable storage medium, including computer software instructions, also referred to as instructions. When the computer software instructions are run, the method according to any one of the sixth aspect or the possible designs of the sixth aspect is implemented. For example, when the computer software instructions are run in a communication device or an apparatus built in the communication device, the communication device is caused to implement the method according to any one of the sixth aspect or the possible designs of the sixth aspect.

It may be understood that for beneficial effects that can be achieved according to the seventh aspect to the tenth aspect, refer to the beneficial effects according to any one of the sixth aspect or the possible designs of the sixth aspect. Details are not described herein again.

According to an eleventh aspect, this application provides a communication method. The method is applied to a first sensing service control function network element side. The method includes: sending a fourth request message to a first access network element, where the fourth request message indicates the first access network element to serve as a first sensing entity; receiving a fourth response message from the first access network element, where the fourth response message indicates that the first access network element is acknowledged as the first sensing entity; sending a fifth request message to a second sensing service control function network element, where the fifth request message indicates to request a second operator network to provide an access network element as a second sensing entity for a first operator network; and receiving a fifth response message from the second sensing service control function network element, where the fifth response message indicates that a second access network element is provided as the second sensing entity of the first operator network.

The first sensing entity and the second sensing entity are configured to obtain sensing data, the first access network element and the first sensing service control function network element belong to the first operator network, and the second access network element and the second sensing service control function network element belong to the second operator network.

For example, the method in the first aspect may be applied to the first sensing service control function network element. For example, the method is performed by a communication device that is deployed with or carries the first sensing service control function network element, or is performed by an apparatus (for example, a chip or a software module) in the communication device that is deployed with or carries the first sensing service control function network element.

According to the communication method, different operator networks can share a sensing entity to obtain sensing data. For example, according to the communication method, the first operator network can use the second RAN network element in the second operator network as a sensing entity, to obtain the sensing data.

In a possible design, the second sensing entity is configured to receive a sensing signal, and the method further includes: receiving a sixth request message from the second sensing service control function network element, where the sixth request message indicates to request to establish a first sensing bearer between a first sensing data processing function network element and a second sensing data processing function network element; sending a first request message to the first sensing data processing function network element, where the first request message indicates to request to establish the first sensing bearer; receiving a first response message from the first sensing data processing function network element, where the first response message indicates that establishment of the first sensing bearer is acknowledged; and sending a sixth response message to the second sensing service control function network element, where the sixth response message indicates that establishment of the first sensing bearer is acknowledged.

The first sensing bearer is used by the second sensing data processing function network element to send the sensing data to the first sensing data processing function network element, the second sensing data processing function network element belongs to the second operator network, and the first sensing data processing function network element belongs to the first operator network.

In this design, the first sensing bearer may be established between the first SDPF and the second SDPF for transmission of the sensing data.

In a possible design, the first sensing entity is configured to send the sensing signal, the second sensing entity is configured to receive the sensing signal, and the method further includes: sending a first sensing request message to the first access network element, where the first sensing request message indicates the first access network element to perform sensing.

In a possible design, the second sensing entity is configured to send the sensing signal, and the method further includes: sending a second sensing request message to the second sensing service control function network element, where the second sensing request message indicates the second access network element to perform sensing.

In a possible design, the method further includes: sending a seventh request message to a first network repository function network element, where the seventh request message indicates to request to obtain fully qualified domain name information of the second sensing service control function network element; and receiving a seventh response message from the first network repository function network element, where the seventh response message indicates the fully qualified domain name information of the second sensing service control function network element.

The first network repository function network element belongs to the first operator network.

In a possible design, the first sensing entity is configured to send the sensing signal, the second sensing entity is configured to receive the sensing signal, and the fourth response message and the fifth request message include a spectrum resource carrying the sensing signal.

In a possible design, the second sensing entity is configured to send the sensing signal, the first sensing entity is configured to receive the sensing signal, and the fourth request message and the fifth response message include a spectrum resource carrying the sensing signal.

In a possible design, the fifth request message includes at least one of the following information: a sensing service identifier, a sensing area, sensing data requirement information, and sensing entity requirement information; the sensing service identifier indicates a sensing service; the sensing area indicates a sensing range of the second sensing entity; the sensing data requirement information indicates a sensing data requirement of the sensing service; and the sensing entity requirement information indicates a sensing entity type of the second sensing entity, where the sensing entity type includes a sending sensing entity and/or a receiving sensing entity.

In a possible design, the sending the fifth request message to the second sensing service control function network element includes: when available sensing entity resources in the first operator network are insufficient, sending the fifth request message to the second sensing service control function network element.

In this design, when the available sensing entity resources in the first operator network are insufficient, the first operator network uses the second RAN network element in the second operator network as the sensing entity to obtain the sensing data.

According to a twelfth aspect, this application provides a communication apparatus. The apparatus has a function of implementing the method according to the eleventh aspect. The function may be implemented by using hardware, or may be implemented by executing corresponding software by hardware. The hardware or the software includes one or more units or modules corresponding to the functions of the method according to the eleventh aspect, for example, a sending unit and a receiving unit.

The sending unit is configured to send a fourth request message to a first access network element, where the fourth request message indicates the first access network element to serve as a first sensing entity; and the receiving unit is configured to receive a fourth response message from the first access network element, where the fourth response message indicates that the first access network element is acknowledged as the first sensing entity.

The sending unit is further configured to send a fifth request message to a second sensing service control function network element, where the fifth request message indicates to request a second operator network to provide an access network element as a second sensing entity for a first operator network; and the receiving unit is further configured to receive a fifth response message from the second sensing service control function network element, where the fifth response message indicates that a second access network element is provided as the second sensing entity of the first operator network.

The first sensing entity and the second sensing entity are configured to obtain sensing data, the first access network element and the first sensing service control function network element belong to the first operator network, and the second access network element and the second sensing service control function network element belong to the second operator network.

In a possible design, the second sensing entity is configured to receive a sensing signal; the receiving unit is further configured to receive a sixth request message from the second sensing service control function network element, where the sixth request message indicates to request to establish a first sensing bearer between a first sensing data processing function network element and a second sensing data processing function network element; and the sending unit is further configured to send a first request message to the first sensing data processing function network element, where the first request message indicates to request to establish the first sensing bearer.

The receiving unit is further configured to receive a first response message from the first sensing data processing function network element, where the first response message indicates that establishment of the first sensing bearer is acknowledged; and the sending unit is further configured to send a sixth response message to the second sensing service control function network element, where the sixth response message indicates that establishment of the first sensing bearer is acknowledged.

The first sensing bearer is used by the second sensing data processing function network element to send the sensing data to the first sensing data processing function network element, the second sensing data processing function network element belongs to the second operator network, and the first sensing data processing function network element belongs to the first operator network.

In a possible design, the first sensing entity is configured to send the sensing signal, the second sensing entity is configured to receive the sensing signal, and the sending unit is further configured to send a first sensing request message to the first access network element, where the first sensing request message indicates the first access network element to perform sensing.

In a possible design, the second sensing entity is configured to send the sensing signal, and the sending unit is further configured to send a second sensing request message to the second sensing service control function network element, where the second sensing request message indicates the second access network element to perform sensing.

In a possible design, the sending unit is further configured to send a seventh request message to a first network repository function network element, where the seventh request message indicates to request to obtain fully qualified domain name information of the second sensing service control function network element; and the receiving unit is further configured to receive a seventh response message from the first network repository function network element, where the seventh response message indicates the fully qualified domain name information of the second sensing service control function network element.

The first network repository function network element belongs to the first operator network.

In a possible design, the first sensing entity is configured to send the sensing signal, the second sensing entity is configured to receive the sensing signal, and the fourth response message and the fifth request message include a spectrum resource carrying the sensing signal.

In a possible design, the second sensing entity is configured to send the sensing signal, the first sensing entity is configured to receive the sensing signal, and the fourth request message and the fifth response message include a spectrum resource carrying the sensing signal.

In a possible design, the fifth request message includes at least one of the following information: a sensing service identifier, a sensing area, sensing data requirement information, and sensing entity requirement information; the sensing service identifier indicates a sensing service; the sensing area indicates a sensing range of the second sensing entity; the sensing data requirement information indicates a sensing data requirement of the sensing service; and the sensing entity requirement information indicates a sensing entity type of the second sensing entity, where the sensing entity type includes a sending sensing entity and/or a receiving sensing entity.

In a possible design, the sending unit is specifically configured to: when available sensing entity resources in the first operator network are insufficient, send the fifth request message to the second sensing service control function network element.

According to a thirteenth aspect, this application further provides a communication apparatus, including a processor, configured to execute computer instructions stored in a memory. When the computer instructions are executed, the apparatus is caused to perform the method according to any one of the eleventh aspect or the possible designs of the eleventh aspect.

According to a fourteenth aspect, this application further provides a communication apparatus, including a processor and an interface circuit. The processor is configured to communicate with another apparatus through the interface circuit, and perform the method according to any one of the eleventh aspect or the possible designs of the eleventh aspect.

For example, in the thirteenth aspect and the fourteenth aspect, the processor is configured to perform the method according to any one of the eleventh aspect or the possible designs of the eleventh aspect.

The communication apparatus according to any one of the twelfth aspect to the fourteenth aspect may be used in a first sensing service control function network element. For example, the communication apparatus according to any one of the twelfth aspect to the fourteenth aspect may be a communication device that is deployed with or carries the first sensing service control function network element, or an apparatus (for example, a chip or a software module) in the communication device that is deployed with or carries the first sensing service control function network element.

According to a fifteenth aspect, this application further provides a computer-readable storage medium, including computer software instructions, also referred to as instructions. When the computer software instructions are run, the method according to any one of the eleventh aspect or the possible designs of the eleventh aspect is implemented. For example, when the computer software instructions are run in a communication device or an apparatus built in the communication device, the communication device is caused to implement the method according to any one of the eleventh aspect or the possible designs of the eleventh aspect.

It may be understood that for beneficial effects that can be achieved according to the twelfth aspect to the fifteenth aspect, refer to the beneficial effects according to any one of the eleventh aspect or the possible designs of the eleventh aspect. Details are not described herein again.

According to a sixteenth aspect, this application provides a communication method. The method is applied to a second sensing service control function network element side, and the method includes: receiving a fifth request message from a first sensing service control function network element, where the fifth request message indicates to request a second operator network to provide an access network element as a second sensing entity for a first operator network; sending an eighth request message to a second access network element, where the eighth request message indicates the second access network element to serve as the second sensing entity of the first operator network; receiving an eighth response message from the second access network element, where the eighth response message indicates that the second access network element is acknowledged as the second sensing entity of the first operator network; and sending a fifth response message to the first sensing service control function network element, where the fifth response message indicates that the second access network element is provided as the second sensing entity of the first operator network.

The second sensing entity is configured to obtain sensing data, the first sensing service control function network element belongs to the first operator network, and the second access network element and the second sensing service control function network element belong to the second operator network.

For example, the method in the sixteenth aspect may be applied to the second sensing service control function network element. For example, the method is performed by a communication device that is deployed with or carries the second sensing service control function network element, or is performed by an apparatus (for example, a chip or a software module) in the communication device that is deployed with or carries the second sensing service control function network element.

According to the communication method, different operator networks can share a sensing entity to obtain sensing data. For example, according to the communication method, the first operator network can use the second RAN network element in the second operator network as a sensing entity, to obtain the sensing data.

In a possible design, the method further includes: sending a sixth request message to the first sensing service control function network element, where the sixth request message indicates to request to establish a first sensing bearer between a first sensing data processing function network element and a second sensing data processing function network element; and receiving a sixth response message from the first sensing service control function network element, where the sixth response message indicates that establishment of the first sensing bearer is acknowledged.

The first sensing bearer is used by the second sensing data processing function network element to send the sensing data to the first sensing data processing function network element, the second sensing data processing function network element belongs to the second operator network, and the first sensing data processing function network element belongs to the first operator network.

In this design, the first sensing bearer may be established between the first SDPF and the second SDPF for transmission of the sensing data.

In a possible design, the method further includes: sending a second request message to the second sensing data processing function network element, where the second request message indicates to request to establish the first sensing bearer; receiving a second response message from the second sensing data processing function network element, where the second response message indicates that establishment of the first sensing bearer is acknowledged; sending a third request message to the second sensing data processing function network element, where the third request message indicates to request to modify the first sensing bearer; and receiving a third response message from the second sensing data processing function network element, where the third response message indicates that modification of the first sensing bearer is acknowledged.

In a possible design, the second sensing entity is configured to send a sensing signal, and the method further includes: receiving a second sensing request message from the first sensing service control function network element, where the second sensing request message indicates the second access network element to perform sensing; and sending a third sensing request message to the second access network element, where the third sensing request message indicates the second access network element to perform sensing.

In a possible design, the second sensing entity is configured to receive the sensing signal, and the fifth request message and the eighth request message include a spectrum resource carrying the sensing signal.

In a possible design, the second sensing entity is configured to send the sensing signal, and the fifth response message and the eighth response message include the spectrum resource carrying the sensing signal.

In a possible design, the fifth request message includes at least one of the following information: a sensing service identifier, a sensing area, sensing data requirement information, and sensing entity requirement information; the sensing service identifier indicates a sensing service; the sensing area indicates a sensing range of the second sensing entity; the sensing data requirement information indicates a sensing data requirement of the sensing service; and the sensing entity requirement information indicates a sensing entity type of the second sensing entity, where the sensing entity type includes a sending sensing entity and/or a receiving sensing entity.

According to a seventeenth aspect, this application provides a communication apparatus. The apparatus has a function of implementing the method according to the sixteenth aspect. The function may be implemented by using hardware, or may be implemented by executing corresponding software by hardware. The hardware or the software includes one or more units or modules corresponding to the functions of the method according to the sixteenth aspect, for example, a receiving unit and a sending unit.

The receiving unit is configured to receive a fifth request message from a first sensing service control function network element, where the fifth request message indicates to request a second operator network to provide an access network element as a second sensing entity for a first operator network; and the sending unit is configured to send an eighth request message to a second access network element, where the eighth request message indicates the second access network element to serve as the second sensing entity of the first operator network.

The receiving unit is further configured to receive an eighth response message from the second access network element, where the eighth response message indicates that the second access network element is acknowledged as the second sensing entity of the first operator network; and the sending unit is further configured to send a fifth response message to the first sensing service control function network element, where the fifth response message indicates that the second access network element is provided as the second sensing entity of the first operator network.

The second sensing entity is configured to obtain sensing data, the first sensing service control function network element belongs to the first operator network, and the second access network element and a second sensing service control function network element belong to the second operator network.

In a possible design, the sending unit is further configured to send a sixth request message to the first sensing service control function network element, where the sixth request message indicates to request to establish a first sensing bearer between a first sensing data processing function network element and a second sensing data processing function network element; and the receiving unit is further configured to receive a sixth response message from the first sensing service control function network element, where the sixth response message indicates that establishment of the first sensing bearer is acknowledged.

The first sensing bearer is used by the second sensing data processing function network element to send the sensing data to the first sensing data processing function network element, the second sensing data processing function network element belongs to the second operator network, and the first sensing data processing function network element belongs to the first operator network.

In a possible design, the sending unit is further configured to send a second request message to the second sensing data processing function network element, where the second request message indicates to request to establish the first sensing bearer; and the receiving unit is further configured to receive a second response message from the second sensing data processing function network element, where the second response message indicates that establishment of the first sensing bearer is acknowledged.

The sending unit is further configured to send a third request message to the second sensing data processing function network element, where the third request message indicates to request to modify the first sensing bearer; and the receiving unit is further configured to receive a third response message from the second sensing data processing function network element, where the third response message indicates that modification of the first sensing bearer is acknowledged.

In a possible design, the second sensing entity is configured to send a sensing signal, and the receiving unit is further configured to receive a second sensing request message from the first sensing service control function network element, where the second sensing request message indicates the second access network element to perform sensing; and the sending unit is further configured to send a third sensing request message to the second access network element, where the third sensing request message indicates the second access network element to perform sensing.

In a possible design, the second sensing entity is configured to receive the sensing signal, and the fifth request message and the eighth request message include a spectrum resource carrying the sensing signal.

In a possible design, the second sensing entity is configured to send the sensing signal, and the fifth response message and the eighth response message include the spectrum resource carrying the sensing signal.

In a possible design, the fifth request message includes at least one of the following information: a sensing service identifier, a sensing area, sensing data requirement information, and sensing entity requirement information; the sensing service identifier indicates a sensing service; the sensing area indicates a sensing range of the second sensing entity; the sensing data requirement information indicates a sensing data requirement of the sensing service; and the sensing entity requirement information indicates a sensing entity type of the second sensing entity, where the sensing entity type includes a sending sensing entity and/or a receiving sensing entity.

According to an eighteenth aspect, this application further provides a communication apparatus, including a processor, configured to execute computer instructions stored in a memory. When the computer instructions are executed, the apparatus is caused to perform the method according to any one of the sixteenth aspect or the possible designs of the sixteenth aspect.

According to a nineteenth aspect, this application further provides a communication apparatus, including a processor and an interface circuit. The processor is configured to communicate with another apparatus through the interface circuit, and perform the method according to any one of the sixteenth aspect or the possible designs of the sixteenth aspect.

For example, in the eighteenth aspect and the nineteenth aspect, the processor is configured to perform the method according to any one of the sixteenth aspect or the possible designs of the sixteenth aspect.

The communication apparatus according to any one of the seventeenth aspect to the nineteenth aspect may be used in a second sensing service control function network element. For example, the communication apparatus according to any one of the seventeenth aspect to the nineteenth aspect may be a communication device that is deployed with or carries the second sensing service control function network element, or an apparatus (for example, a chip or a software module) in the communication device that is deployed with or carries the second sensing service control function network element.

According to a twentieth aspect, this application further provides a computer-readable storage medium, including computer software instructions, also referred to as instructions. When the computer software instructions are run, the method according to any one of the sixteenth aspect or the possible designs of the sixteenth aspect is implemented. For example, when the computer software instructions are run in a communication device or an apparatus built in the communication device, the communication device is caused to implement the method according to any one of the sixteenth aspect or the possible designs of the sixteenth aspect.

It may be understood that for beneficial effects that can be achieved according to the seventeenth aspect to the twentieth aspect, refer to the beneficial effects according to any one of the sixteenth aspect or the possible designs of the sixteenth aspect. Details are not described herein again.

According to a twenty-first aspect, this application provides a communication method. The method is applied to a second user plane function network element side, and the method includes: receiving first sensing data from a second access network element, where the first sensing data is obtained by the second access network element based on a received sensing signal; and sending the first sensing data to a first user plane function.

The first user plane function network element belongs to a first operator network, and the second access network element and the second user plane function network element belong to a second operator network.

For example, the method in the twenty-first aspect may be applied to the second user plane function network element. For example, the method is performed by a communication device that is deployed with or carries the second user plane function network element, or is performed by an apparatus (for example, a chip or a software module) in the communication device that is deployed with or carries the second user plane function network element.

According to the communication method, different operator networks can share a sensing entity to obtain sensing data. For example, according to the communication method, the first operator network can use the second RAN network element in the second operator network as a sensing entity, to obtain the sensing data.

In a possible design, a message carrying the first sensing data indicates or carries first indication information, where the first indication information indicates that the sensing data needs to be transmitted to a first sensing data processing function network element, and the first sensing data processing function network element belongs to the first operator network.

According to a twenty-second aspect, this application provides a communication apparatus. The apparatus has a function of implementing the method according to the twenty-first aspect. The function may be implemented by using hardware, or may be implemented by executing corresponding software by hardware. The hardware or the software includes one or more units or modules corresponding to the functions of the method according to the twenty-first aspect, for example, a receiving unit and a sending unit.

The receiving unit is configured to receive first sensing data from a second access network element, where the first sensing data is obtained by the second access network element based on a received sensing signal; and the sending unit is configured to send the first sensing data to a first user plane function.

The first user plane function network element belongs to a first operator network, and the second access network element and a second user plane function network element belong to a second operator network.

In a possible design, a message carrying the first sensing data indicates or carries first indication information, where the first indication information indicates that the sensing data needs to be transmitted to a first sensing data processing function network element, and the first sensing data processing function network element belongs to the first operator network.

According to a twenty-third aspect, this application further provides a communication apparatus, including a processor, configured to execute computer instructions stored in a memory. When the computer instructions are executed, the apparatus is caused to perform the method according to any one of the twenty-first aspect or the possible designs of the twenty-first aspect.

According to a twenty-fourth aspect, this application further provides a communication apparatus, including a processor and an interface circuit. The processor is configured to communicate with another apparatus through the interface circuit, and perform the method according to any one of the twenty-first aspect or the possible designs of the twenty-first aspect.

For example, in the twenty-third aspect and the twenty-fourth aspect, the processor is configured to perform the method according to any one of the twenty-first aspect or the possible designs of the twenty-first aspect.

The communication apparatus according to any one of the twenty-second aspect to the twenty-fourth aspect may be used in a second user plane function network element. For example, the communication apparatus according to any one of the twenty-second aspect to the twenty-fourth aspect may be a communication device that is deployed with or carries the second user plane function network element, or an apparatus (for example, a chip or a software module) in the communication device that is deployed with or carries the second user plane function network element.

According to a twenty-fifth aspect, this application further provides a computer-readable storage medium, including computer software instructions, also referred to as instructions. When the computer software instructions are run, the method according to any one of the twenty-first aspect or the possible designs of the twenty-first aspect is implemented. For example, when the computer software instructions are run in a communication device or an apparatus built in the communication device, the communication device is caused to implement the method according to any one of the twenty-first aspect or the possible designs of the twenty-first aspect.

It may be understood that for beneficial effects that can be achieved according to the twenty-second aspect to the twenty-fifth aspect, refer to the beneficial effects according to any one of the twenty-first aspect or the possible designs of the twenty-first aspect. Details are not described herein again.

According to a twenty-sixth aspect, this application provides a communication method. The method is applied to a first user plane function network element side, and the method includes: receiving first sensing data sent by a second user plane function, where the first sensing data is obtained by a second access network element based on a received sensing signal; and sending the first sensing data to a first sensing data processing function network element.

A first user plane function network element and the first sensing data processing function network element belong to a first operator network, and the second access network element and the second user plane function network element belong to a second operator network.

For example, the method in the twenty-sixth aspect may be applied to the first user plane function network element. For example, the method is performed by a communication device that is deployed with or carries the first user plane function network element, or is performed by an apparatus (for example, a chip or a software module) in the communication device that is deployed with or carries the first user plane function network element.

According to the communication method, different operator networks can share a sensing entity to obtain sensing data. For example, according to the communication method, the first operator network can use the second RAN network element in the second operator network as a sensing entity, to obtain the sensing data.

In a possible design, a message carrying the first sensing data indicates or carries first indication information, where the first indication information indicates that the sensing data needs to be transmitted to the first sensing data processing function network element.

According to a twenty-seventh aspect, this application provides a communication apparatus. The apparatus has a function of implementing the method according to the twenty-sixth aspect. The function may be implemented by using hardware, or may be implemented by executing corresponding software by hardware. The hardware or the software includes one or more units or modules corresponding to the functions of the method according to the twenty-sixth aspect, for example, a receiving unit and a sending unit.

The receiving unit is configured to receive first sensing data sent by a second user plane function, where the first sensing data is obtained by a second access network element based on a received sensing signal; and the sending unit is configured to send the first sensing data to a first sensing data processing function network element.

A first user plane function network element and the first sensing data processing function network element belong to a first operator network, and the second access network element and the second user plane function network element belong to a second operator network.

In a possible design, a message carrying the first sensing data indicates or carries first indication information, where the first indication information indicates that the sensing data needs to be transmitted to the first sensing data processing function network element.

According to a twenty-eighth aspect, this application further provides a communication apparatus, including a processor, configured to execute computer instructions stored in a memory. When the computer instructions are executed, the apparatus is caused to perform the method according to any one of the twenty-sixth aspect or the possible designs of the twenty-sixth aspect.

According to a twenty-ninth aspect, this application further provides a communication apparatus, including a processor and an interface circuit. The processor is configured to communicate with another apparatus through the interface circuit, and perform the method according to any one of the twenty-sixth aspect or the possible designs of the twenty-sixth aspect.

For example, in the twenty-eighth aspect and the twenty-ninth aspect, the processor is configured to perform the method according to any one of the twenty-sixth aspect or the possible designs of the twenty-sixth aspect.

The communication apparatus according to any one of the twenty-seventh aspect to the twenty-ninth aspect may be used in a first user plane function network element. For example, the communication apparatus according to any one of the twenty-seventh aspect to the twenty-ninth aspect may be a communication device that is deployed with or carries the first user plane function network element, or an apparatus (for example, a chip or a software module) in the communication device that is deployed with or carries the first user plane function network element.

According to a thirtieth aspect, this application further provides a computer-readable storage medium, including computer software instructions, also referred to as instructions. When the computer software instructions are run, the method according to any one of the twenty-sixth aspect or the possible designs of the twenty-sixth aspect is implemented. For example, when the computer software instructions are run in a communication device or an apparatus built in the communication device, the communication device is caused to implement the method according to any one of the twenty-sixth aspect or the possible designs of the twenty-sixth aspect.

It may be understood that for beneficial effects that can be achieved according to the twenty-seventh aspect to the thirtieth aspect, refer to the beneficial effects according to any one of the twenty-sixth aspect or the possible designs of the twenty-sixth aspect. Details are not described herein again.

According to a thirty-first aspect, this application provides a communication method. The method is applied to a first network repository function network element side, and the method includes: receiving a seventh request message from a first sensing service control function, where the seventh request message indicates to request to obtain fully qualified domain name information of a second sensing service control function network element; sending a ninth request message to a second network repository function network element, where the ninth request message indicates to request to obtain the fully qualified domain name information of the second sensing service control function network element; receiving a ninth response message from the second network repository function network element, where the ninth response message indicates the fully qualified domain name information of the second sensing service control function network element; and sending a seventh response message to the first sensing service control function, where the seventh response message indicates the fully qualified domain name information of the second sensing service control function network element.

The first network repository function network element and the first sensing service control function belong to a first operator network, and the second network repository function network element and the second sensing service control function belong to a second operator network.

For example, the method in the thirty-first aspect may be applied to the first network repository function network element. For example, the method is performed by a communication device that is deployed with or carries the first network repository function network element, or is performed by an apparatus (for example, a chip or a software module) in the communication device that is deployed with or carries the first network repository function network element.

According to the communication method, different operator networks can share a sensing entity to obtain sensing data. For example, according to the communication method, the first operator network can use a second RAN network element in the second operator network as a sensing entity, to obtain sensing data.

According to a thirty-second aspect, this application provides a communication apparatus. The apparatus has a function of implementing the method according to the thirty-first aspect. The function may be implemented by using hardware, or may be implemented by executing corresponding software by hardware. The hardware or the software includes one or more units or modules corresponding to the functions of the method according to the thirty-first aspect, for example, a receiving unit and a sending unit.

The receiving unit is configured to receive a seventh request message from a first sensing service control function, where the seventh request message indicates to request to obtain fully qualified domain name information of a second sensing service control function network element; and the sending unit is configured to send a ninth request message to a second network repository function network element, where the ninth request message indicates to request the fully qualified domain name information of the second sensing service control function network element.

The receiving unit is further configured to receive a ninth response message from the second network repository function network element, where the ninth response message indicates the fully qualified domain name information of the second sensing service control function network element; and the sending unit is further configured to send a seventh response message to the first sensing service control function, where the seventh response message indicates the fully qualified domain name information of the second sensing service control function network element.

A first network repository function network element and the first sensing service control function belong to a first operator network, and the second network repository function network element and the second sensing service control function belong to a second operator network.

According to a thirty-third aspect, this application further provides a communication apparatus, including a processor, configured to execute computer instructions stored in a memory. When the computer instructions are executed, the apparatus is caused to perform the method according to any one of the thirty-first aspect or the possible designs of the thirty-first aspect.

According to a thirty-fourth aspect, this application further provides a communication apparatus, including a processor and an interface circuit. The processor is configured to communicate with another apparatus through the interface circuit, and perform the method according to any one of the thirty-first aspect or the possible designs of the thirty-first aspect.

For example, in the thirty-third aspect and the thirty-fourth aspect, the processor is configured to perform the method according to any one of the thirty-first aspect or the possible designs of the thirty-first aspect.

The communication apparatus according to any one of the thirty-second aspect to the thirty-fourth aspect may be used in a first network repository function network element. For example, the communication apparatus according to any one of the thirty-second aspect to the thirty-fourth aspect may be a communication device that is deployed with or carries the first network repository function network element, or an apparatus (for example, a chip or a software module) in the communication device that is deployed with or carries the first network repository function network element.

According to a thirty-fifth aspect, this application further provides a computer-readable storage medium, including computer software instructions, also referred to as instructions. When the computer software instructions are run, the method according to any one of the thirty-first aspect or the possible designs of the thirty-first aspect is implemented. For example, when the computer software instructions are run in a communication device or an apparatus built in the communication device, the communication device is caused to implement the method according to any one of the thirty-first aspect or the possible designs of the thirty-first aspect.

It may be understood that for beneficial effects that can be achieved according to the thirty-second aspect to the thirty-fifth aspect, refer to the beneficial effects according to any one of the thirty-first aspect or the possible designs of the thirty-first aspect. Details are not described herein again.

According to a thirty-sixth aspect, this application provides a communication method. The method is applied to a second network repository function network element side, and the method includes: receiving a ninth request message from a first network repository function network element, where the ninth request message indicates to request to obtain fully qualified domain name information of a second sensing service control function network element; and sending a ninth response message to the first network repository function network element, where the ninth response message indicates the fully qualified domain name information of the second sensing service control function network element.

The first network repository function network belongs to a first operator network, and the second network repository function network element and the second sensing service control function belong to a second operator network.

For example, the method in the thirty-sixth aspect may be applied to the second network repository function network element. For example, the method is performed by a communication device that is deployed with or carries the second network repository function network element, or is performed by an apparatus (for example, a chip or a software module) in the communication device that is deployed with or carries the second network repository function network element.

According to the communication method, different operator networks can share a sensing entity to obtain sensing data. For example, according to the communication method, the first operator network can use a second RAN network element in the second operator network as a sensing entity, to obtain sensing data.

According to a thirty-seventh aspect, this application provides a communication apparatus. The apparatus has a function of implementing the method according to the thirty-sixth aspect. The function may be implemented by using hardware, or may be implemented by executing corresponding software by hardware. The hardware or the software includes one or more units or modules corresponding to the functions of the method according to the thirty-sixth aspect, for example, a receiving unit and a sending unit.

The receiving unit is configured to receive a ninth request message from a first network repository function network element, where the ninth request message indicates to request to obtain fully qualified domain name information of a second sensing service control function network element; and the sending unit is configured to send a ninth response message to the first network repository function network element, where the ninth response message indicates the fully qualified domain name information of the second sensing service control function network element.

The first network repository function network belongs to a first operator network, and the second network repository function network element and the second sensing service control function belong to a second operator network.

According to a thirty-eighth aspect, this application further provides a communication apparatus, including a processor, configured to execute computer instructions stored in a memory. When the computer instructions are executed, the apparatus is caused to perform the method according to any one of the thirty-sixth aspect or the possible designs of the thirty-sixth aspect.

According to a thirty-ninth aspect, this application further provides a communication apparatus, including a processor and an interface circuit. The processor is configured to communicate with another apparatus through the interface circuit, and perform the method according to any one of the thirty-sixth aspect or the possible designs of the thirty-sixth aspect.

For example, in the thirty-eighth aspect and the thirty-ninth aspect, the processor is configured to perform the method according to any one of the thirty-sixth aspect or the possible designs of the thirty-sixth aspect.

The communication apparatus according to any one of the thirty-seventh aspect to the thirty-ninth aspect may be used in a second network repository function network element. For example, the communication apparatus according to any one of the thirty-seventh aspect to the thirty-ninth aspect may be a communication device that is deployed with or carries the second network repository function network element, or an apparatus (for example, a chip or a software module) in the communication device that is deployed with or carries the second network repository function network element.

According to a fortieth aspect, this application further provides a computer-readable storage medium, including computer software instructions, also referred to as instructions. When the computer software instructions are run, the method according to any one of the thirty-sixth aspect or the possible designs of the thirty-sixth aspect is implemented. For example, when the computer software instructions are run in a communication device or an apparatus built in the communication device, the communication device is caused to implement the method according to any one of the thirty-sixth aspect or the possible designs of the thirty-sixth aspect.

It may be understood that for beneficial effects that can be achieved according to the thirty-seventh aspect to the fortieth aspect, refer to the beneficial effects according to any one of the thirty-sixth aspect or the possible designs of the thirty-sixth aspect. Details are not described herein again.

According to a forty-first aspect, this application provides a communication method. The method is applied to a first sensing service control function network element side, and the method includes: receiving a sixth request message from a second sensing service control function network element, where the sixth request message indicates to request to establish a first sensing bearer between a first sensing data processing function network element and a second sensing data processing function network element; sending a first request message to the first sensing data processing function network element, where the first request message indicates to request to establish the first sensing bearer; receiving a first response message from the first sensing data processing function network element, where the first response message indicates that establishment of the first sensing bearer is acknowledged; and sending a sixth response message to the second sensing service control function network element, where the sixth response message indicates that establishment of the first sensing bearer is acknowledged.

The first sensing bearer is used by the second sensing data processing function network element to send sensing data to the first sensing data processing function network element, the first sensing service control function network element and the first sensing data processing function network element belong to a first operator network, and the second sensing service control function network element and the second sensing data processing function network element belong to a second operator network.

For example, the method in the forty-first aspect may be applied to the first sensing service control function network element. For example, the method is performed by a communication device that is deployed with or carries the first sensing service control function network element, or is performed by an apparatus (for example, a chip or a software module) in the communication device that is deployed with or carries the first sensing service control function network element.

According to the communication method, the sensing bearer between the first SDPF network element and the second SDPF network element can be established for transmission of the sensing data.

According to a forty-second aspect, this application provides a communication apparatus. The apparatus has a function of implementing the method according to the forty-first aspect. The function may be implemented by using hardware, or may be implemented by executing corresponding software by hardware. The hardware or the software includes one or more units or modules corresponding to the functions of the method according to the forty-first aspect, for example, a receiving unit and a sending unit.

The receiving unit is configured to receive a sixth request message from a second sensing service control function network element, where the sixth request message indicates to request to establish a first sensing bearer between a first sensing data processing function network element and a second sensing data processing function network element; and the sending unit is configured to send a first request message to the first sensing data processing function network element, where the first request message indicates to request to establish the first sensing bearer.

The receiving unit is further configured to receive a first response message from the first sensing data processing function network element, where the first response message indicates that establishment of the first sensing bearer is acknowledged; and the sending unit is further configured to send a sixth response message to the second sensing service control function network element, where the sixth response message indicates that establishment of the first sensing bearer is acknowledged.

The first sensing bearer is used by the second sensing data processing function network element to send sensing data to the first sensing data processing function network element, a first sensing service control function network element and the first sensing data processing function network element belong to a first operator network, and the second sensing service control function network element and the second sensing data processing function network element belong to a second operator network.

According to a forty-third aspect, this application further provides a communication apparatus, including a processor, configured to execute computer instructions stored in a memory. When the computer instructions are executed, the apparatus is caused to perform the method according to any one of the forty-first aspect or the possible designs of the forty-first aspect.

According to a forty-fourth aspect, this application further provides a communication apparatus, including a processor and an interface circuit. The processor is configured to communicate with another apparatus through the interface circuit, and perform the method according to any one of the forty-first aspect or the possible designs of the forty-first aspect.

For example, in the forty-third aspect and the forty-fourth aspect, the processor is configured to perform the method according to any one of the forty-first aspect or the possible designs of the forty-first aspect.

The communication apparatus according to any one of the forty-second aspect to the forty-fourth aspect may be used in a first sensing service control function network element. For example, the communication apparatus according to any one of the forty-second aspect to the forty-fourth aspect may be a communication device that is deployed with or carries the first sensing service control function network element, or an apparatus (for example, a chip or a software module) in the communication device that is deployed with or carries the first sensing service control function network element.

According to a forty-fifth aspect, this application further provides a computer-readable storage medium, including computer software instructions, also referred to as instructions. When the computer software instructions are run, the method according to any one of the first aspectfirst aspect or the possible designs of the first aspect is implemented. For example, when the computer software instructions are run in a communication device or an apparatus built in the communication device, the communication device is caused to implement the method according to any one of the forty-first aspect or the possible designs of the forty-first aspect.

It may be understood that for beneficial effects that can be achieved according to the forty-second aspect to the forty-fifth aspect, refer to the beneficial effects according to any one of the forty-first aspect or the possible designs of the forty-first aspect. Details are not described herein again.

According to a forty-sixth aspect, this application provides a communication method. The method is applied to a second sensing service control function network element, and the method includes: sending a sixth request message to a first sensing service control function network element, where the sixth request message indicates to request to establish a first sensing bearer between a first sensing data processing function network element and a second sensing data processing function network element; and receiving a sixth response message from the first sensing service control function network element, where the sixth response message indicates that establishment of the first sensing bearer is acknowledged.

The first sensing bearer is used by the second sensing data processing function network element to send sensing data to the first sensing data processing function network element, the first sensing service control function network element and the first sensing data processing function network element belong to a first operator network, and the second sensing service control function network element and the second sensing data processing function network element belong to a second operator network.

For example, the method in the forty-sixth aspect may be applied to the second sensing service control function network element. For example, the method is performed by a communication device that is deployed with or carries the second sensing service control function network element, or is performed by an apparatus (for example, a chip or a software module) in the communication device that is deployed with or carries the second sensing service control function network element.

According to the communication method, the sensing bearer between the first SDPF network element and the second SDPF network element can be established for transmission of the sensing data.

In a possible design, the method further includes: sending a second request message to the second sensing data processing function network element, where the second request message indicates to request to establish the first sensing bearer; receiving a second response message from the second sensing data processing function network element, where the second response message indicates that establishment of the first sensing bearer is acknowledged; sending a third request message to the second sensing data processing function network element, where the third request message indicates to request to modify the first sensing bearer; and receiving a third response message from the second sensing data processing function network element, where the third response message indicates that modification of the first sensing bearer is acknowledged.

According to a forty-seventh aspect, this application provides a communication apparatus. The apparatus has a function of implementing the method according to the forty-sixth aspect. The function may be implemented by using hardware, or may be implemented by executing corresponding software by hardware. The hardware or the software includes one or more units or modules corresponding to the functions of the method according to the forty-sixth aspect, for example, a sending unit and a receiving unit.

The sending unit is configured to send a sixth request message to a first sensing service control function network element, where the sixth request message indicates to request to establish a first sensing bearer between a first sensing data processing function network element and a second sensing data processing function network element; and the receiving unit is configured to receive a sixth response message from the first sensing service control function network element, where the sixth response message indicates that establishment of the first sensing bearer is acknowledged.

The first sensing bearer is used by the second sensing data processing function network element to send sensing data to the first sensing data processing function network element, the first sensing service control function network element and the first sensing data processing function network element belong to a first operator network, and a second sensing service control function network element and the second sensing data processing function network element belong to a second operator network.

In a possible design, the sending unit is further configured to send a second request message to the second sensing data processing function network element, where the second request message indicates to request to establish the first sensing bearer; and the receiving unit is further configured to receive a second response message from the second sensing data processing function network element, where the second response message indicates that establishment of the first sensing bearer is acknowledged.

The sending unit is further configured to send a third request message to the second sensing data processing function network element, where the third request message indicates to request to modify the first sensing bearer; and the receiving unit is further configured to receive a third response message from the second sensing data processing function network element, where the third response message indicates that modification of the first sensing bearer is acknowledged.

According to a forty-eighth aspect, this application further provides a communication apparatus, including a processor, configured to execute computer instructions stored in a memory. When the computer instructions are executed, the apparatus is caused to perform the method according to any one of the forty-sixth aspect or the possible designs of the forty-sixth aspect.

According to a forty-ninth aspect, this application further provides a communication apparatus, including a processor and an interface circuit. The processor is configured to communicate with another apparatus through the interface circuit, and perform the method according to any one of the forty-sixth aspect or the possible designs of the forty-sixth aspect.

For example, in the forty-eighth aspect and the forty-ninth aspect, the processor is configured to perform the method according to any one of the forty-sixth aspect or the possible designs of the forty-sixth aspect.

The communication apparatus according to any one of the forty-seventh aspect to the forty-ninth aspect may be used in a second sensing service control function network element. For example, the communication apparatus according to any one of the forty-seventh aspect to the forty-ninth aspect may be a communication device that is deployed with or carries the second sensing service control function network element, or an apparatus (for example, a chip or a software module) in the communication device that is deployed with or carries the second sensing service control function network element.

According to a fiftieth aspect, this application further provides a computer-readable storage medium, including computer software instructions, also referred to as instructions. When the computer software instructions are run, the method according to any one of the forty-sixth aspect or the possible designs of the forty-sixth aspect is implemented. For example, when the computer software instructions are run in a communication device or an apparatus built in the communication device, the communication device is caused to implement the method according to any one of the forty-sixth aspect or the possible designs of the forty-sixth aspect.

It may be understood that for beneficial effects that can be achieved according to the forty-seventh aspect to the fiftieth aspect, refer to the beneficial effects according to any one of the forty-sixth aspect or the possible designs of the forty-sixth aspect. Details are not described herein again.

According to a fifty-first aspect, this application provides a communication apparatus, including a transceiver unit and a processing unit. The transceiver unit may be configured to receive and send information, or configured to communicate with another network element. The processing unit may be configured to process data. The apparatus may implement, through the transceiver unit and the processing unit, the method according to any one of the first aspect or the possible designs of the first aspect; the method according to any one of the sixth aspect or the possible designs of the sixth aspect; the method according to any one of the eleventh aspect or the possible designs of the eleventh aspect; the method according to any one of the sixteenth aspect or the possible designs of the sixteenth aspect; the method according to any one of the twenty-first aspect or the possible designs of the twenty-first aspect; the method according to any one of the twenty-sixth aspect or the possible designs of the twenty-sixth aspect; the method according to any one of the thirty-first aspect or the possible designs of the thirty-first aspect; the method according to any one of the thirty-sixth aspect or the possible designs of the thirty-sixth aspect; the method according to any one of the forty-first aspect or the possible designs of the forty-first aspect; or the method according to any one of the forty-sixth aspect or the possible designs of the forty-sixth aspect.

According to a fifty-second aspect, this application further provides a computer program product. When the computer program product is executed, the method according to any one of the first aspect or the possible designs of the first aspect may be implemented; the method according to any one of the sixth aspect or the possible designs of the sixth aspect may be implemented; the method according to any one of the eleventh aspect or the possible designs of the eleventh aspect may be implemented; the method according to any one of the sixteenth aspect or the possible designs of the sixteenth aspect may be implemented; the method according to any one of the twenty-first aspect or the possible designs of the twenty-first aspect may be implemented; the method according to any one of the twenty-sixth aspect or the possible designs of the twenty-sixth aspect may be implemented; the method according to any one of the thirty-first aspect or the possible designs of the thirty-first aspect may be implemented; the method according to any one of the thirty-sixth aspect or the possible designs of the thirty-sixth aspect may be implemented; the method according to any one of the forty-first aspect or the possible designs of the forty-first aspect may be implemented; or the method according to any one of the forty-sixth aspect or the possible designs of the forty-sixth aspect may be implemented.

According to a fifty-third aspect, this application further provides a chip system. The chip system includes one or more interface circuits and one or more processors. The interface circuit and the processor are interconnected through a line. The processor receives computer instructions from a memory of an electronic device through the interface circuit, and executes the computer instructions, to implement the method according to any one of the first aspect or the possible designs of the first aspect; the method according to any one of the sixth aspect or the possible designs of the sixth aspect; the method according to any one of the eleventh aspect or the possible designs of the eleventh aspect; the method according to any one of the sixteenth aspect or the possible designs of the sixteenth aspect; the method according to any one of the twenty-first aspect or the possible designs of the twenty-first aspect; the method according to any one of the twenty-sixth aspect or the possible designs of the twenty-sixth aspect; the method according to any one of the thirty-first aspect or the possible designs of the thirty-first aspect; the method according to any one of the thirty-sixth aspect or the possible designs of the thirty-sixth aspect; the method according to any one of the forty-first aspect or the possible designs of the forty-first aspect; or the method according to any one of the forty-sixth aspect or the possible designs of the forty-sixth aspect.

According to a fifty-fourth aspect, this application further provides a communication system, including one or more of the network elements according to the first aspect, the sixth aspect, the eleventh aspect, the sixteenth aspect, the twenty-first aspect, the twenty-sixth aspect, the thirty-first aspect, the thirty-sixth aspect, the forty-first aspect, the forty-sixth aspect, and the like. The foregoing network elements cooperate to implement the methods mentioned in the first aspect to the fiftieth aspect. For example, each network element performs the steps in the foregoing corresponding aspects.

According to a fifty-fifth aspect, this application further provides a communication device, which may be configured to implement the method according to any one of the first aspect or the possible designs of the first aspect; the method according to any one of the sixth aspect or the possible designs of the sixth aspect; the method according to any one of the eleventh aspect or the possible designs of the eleventh aspect; the method according to any one of the sixteenth aspect or the possible designs of the sixteenth aspect; the method according to any one of the twenty-first aspect or the possible designs of the twenty-first aspect; the method according to any one of the twenty-sixth aspect or the possible designs of the twenty-sixth aspect; the method according to any one of the thirty-first aspect or the possible designs of the thirty-first aspect; the method according to any one of the thirty-sixth aspect or the possible designs of the thirty-sixth aspect; the method according to any one of the forty-first aspect or the possible designs of the forty-first aspect; or the method according to any one of the forty-sixth aspect or the possible designs of the forty-sixth aspect.

It may be understood that for beneficial effects that can be achieved according to the fifty-first aspect to the fifty-fifth aspect, refer to the beneficial effects according to the first aspect to the fortieth aspect. Details are not described herein again.

### BRIEF DESCRIPTION OF DRAWINGS

FIG. 1 is a diagram of a communication system according to an embodiment of this application;
FIG. 2a to FIG. 2f are diagrams of sensing scenarios according to an embodiment of this application;
FIG. 3 is a diagram of composition of a communication device according to an embodiment of this application;
FIG. 4 is a schematic flowchart of a communication method according to an embodiment of this application;
FIG. 5 is another schematic flowchart of a communication method according to an embodiment of this application;
FIG. 6 is still another schematic flowchart of a communication method according to an embodiment of this application;
FIG. 7 is still another schematic flowchart of a communication method according to an embodiment of this application;
FIG. 8 is still another schematic flowchart of a communication method according to an embodiment of this application;
FIG. 9 is still another schematic flowchart of a communication method according to an embodiment of this application;
FIG. 10 is a schematic flowchart of establishing a sensing bearer according to an embodiment of this application;
FIG. 11 is a schematic flowchart of transmitting first sensing data according to an embodiment of this application;
FIG. 12 is a schematic flowchart of establishing a cross-network data transmission channel using UPF network elements according to an embodiment of this application;
FIG. 13 is still another schematic flowchart of a communication method according to an embodiment of this application;
FIG. 14 is still another schematic flowchart of a communication method according to an embodiment of this application;
FIG. 15 is a diagram of a structure of a communication apparatus according to an embodiment of this application; and
FIG. 16 is a diagram of another structure of a communication apparatus according to an embodiment of this application.

### DESCRIPTION OF EMBODIMENTS

Sensing is a process of collecting and processing collected data and generating a sensing result. For example, a distance, a shape, a type, and the like of a surrounding obstacle are determined by collecting data. For another example, a breathing frequency, a heartbeat, and the like of a monitored object are determined by collecting data. The collected data may be data collected via a sensor, or may be data collected via a wireless signal. A process of collecting data via a wireless signal for sensing is also referred to as wireless sensing.

Both wireless sensing and wireless communication are based on electromagnetic wave theories. In a communication system, a transmit end may modulate electromagnetic wave signals, so that electromagnetic waves carry source information. The electromagnetic wave signals are affected by radio environments during propagation. That is, the electromagnetic wave signals are modulated by the environments and therefore carry environment information. By analyzing the electromagnetic wave signals, a receive end can not only obtain the carried source information, but also extract sensing information that reflects propagation environment characteristics, so that integrated sensing and communication (integrated sensing and communication, ISAC) is feasible. The ISAC may also be referred to as joint communications and sensing (joint communications and sensing, JCAS) or communication and sensing integration. Compared with a system in which sensing and communication are separated, the ISAC has a series of advantages, for example, reducing costs, reducing device sizes, reducing power consumption, improving frequency efficiency, and reducing mutual interference between communication and sensing.

By using the sensing capability of the communication system, sensing data may be provided to consumers of the sensing data. For example, the consumers of the sensing data may use the sensing data to implement various functions and services.

For example, the consumer of the sensing data is an object or entity that requests or consumes the sensing data, or is described as a consumer or user of sensing services. A data requester may also be referred to as a data consumer, a data user, a data consumer, a sensing subscription end, a sensing subscriber, or the like. The name is not limited in this application.

In some possible scenarios, the consumer of the sensing data may be a third-party entity, for example, a server, a terminal device, or a data processing system.

For example, in embodiments of this application, the sensing data may be used to implement one or more services and functions such as high-precision positioning and tracking, synchronous imaging, map construction and positioning, human sense enhancement, and gesture and action recognition. The third-party entity may be a server, a system, a device, or the like that is configured to implement the foregoing services and functions, for example, positioning systems or self-driving systems.

In some other possible scenarios, the consumer of the sensing data may alternatively be a network function (network function, NF) network element or entity in a network, for example, an application function (application function, AF) network element or entity, or a data network (data network, DN).

A specific type of the consumer of the sensing data is not limited in this application.

In the foregoing scenario in which the communication system is used to obtain the sensing data, objects configured to obtain the sensing data in the communication system may be referred to as sensing entities, and the sensing entities may include an access network device, a terminal device, and the like. The sensing data obtained by the sensing entities may provide data support for the sensing services. A larger quantity of sensing entities or more abundant sensing entity resources may provide more sensing data for the sensing services.

This application provides a communication method, so that different operator networks can share a sensing entity to obtain sensing data. For example, an operator network A may obtain the sensing data by using sensing entities in an operator network B.

It should be understood that, one operator network may obtain sensing data by using sensing entities in one or more operator networks. For example, there may be multiple operator networks B. In embodiments of this application, an example in which sensing entities in another operator network are used to obtain sensing data is used for description, but this is not limited thereto.

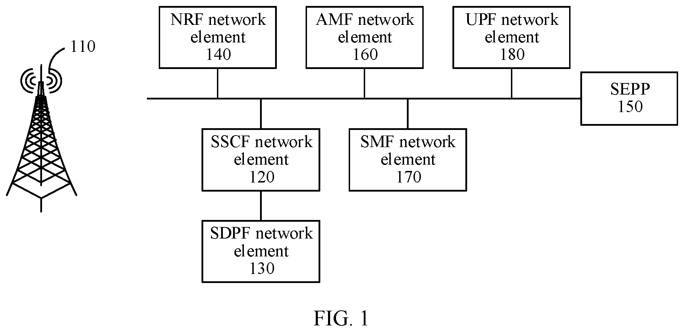

For example, the communication method provided in embodiments of this application may be applicable to interaction between communication systems of two operator networks. FIG. 1 is a diagram of a communication system according to an embodiment of this application. For a communication system of each operator network, refer to FIG. 1.

As shown in FIG. 1, the communication system may include an access network (radio access network, RAN) network element 110, a sensing service control function (sensing service control function, SSCF) network element 120, a sensing data processing function (sensing data processing function, SDPF) network element 130, a network repository function (network repository function, NRF) network element 140, a security edge protection proxy (security edge protection proxy, SEPP) 150, an access and mobility management function (access and mobility management function, AMF) network element 160, a session management function (session management function, SMF) network element 170, a user plane function (user plane function, UPF) network element 180, and the like.

The RAN network element 110 may be a network element in an access network (also referred to as a radio access network), for example, an access network device. The RAN network element 110 may also be referred to as a RAN node (or device).

In a possible scenario, the RAN network element 110 may be a base station (base station), an evolved NodeB (evolved NodeB, eNodeB), a transmission reception point (transmission reception point, TRP), a transmission point (transmission point, TP), a next generation NodeB (next generation NodeB, gNB), a next generation base station in a 6G system, a base station in a future mobile communication system, a satellite, an integrated access and backhaul (integrated access and backhaul, IAB) node, a mobile switching center, or an access network device in a non-terrestrial communication network (non-terrestrial network, NTN) communication system, that is, may be deployed on a high-altitude platform, a satellite, or the like. The RAN network element 110 may be a macro base station, a micro base station, an indoor base station, a relay node, or a donor node, or may be a radio controller in a cloud radio access network (cloud radio access network, CRAN) scenario. The RAN network element 110 may alternatively be a device with a base station function in device-to-device (device-to-device, D2D) communication, internet of vehicles communication, uncrewed aerial vehicle communication, or machine communication. Optionally, the RAN network element 110 may alternatively be a server, a wearable device, a vehicle, a vehicle-mounted device, or the like. For example, a RAN network element 110 in a vehicle to everything (vehicle to everything, V2X) technology may be a roadside unit (roadside unit, RSU).

All or some functions of the RAN network element 110 in this application may alternatively be implemented by using a software function running on hardware, or may be implemented by using an instantiated virtualization function on a platform (for example, a cloud platform). The RAN network element 110 in this application may alternatively be a logical node, a logical module, or software that can implement all or some functions of the RAN network element 110.

In another possible scenario, the RAN network element 110 may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that, the RAN network element 110 may be a CU node, a DU node, or a device including a CU node and a DU node. In addition, the CU may be classified as a network device in an access network RAN, or the CU may be classified as a network device in a core network CN. This is not limited herein.

The CU (or the CU-CP and the CU-UP), the DU, or the RU may also have different names in different systems, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU may be implemented by using a software module, a hardware module, or a combination of a software module and a hardware module.

The SSCF network element 120 and the SDPF network element 130 shown in FIG. 1 may be core network functional modules. The SSCF network element 120 is configured to implement control plane functions of sensing services, for example, configured to receive sensing capability information of a sensing entity, and orchestrate a sensing service based on the sensing capability information of the sensing entity. The sensing service is also referred to as a sensing operation. The SDPF network element 130 is configured to implement data plane functions of the sensing services, for example, configured to process sensing data of the sensing services, to obtain sensing results of the sensing services.

In embodiments of this application, a sensing entity (sensing entity, SE) is a logical entity, and may also be referred to as a logical sensing entity. In a sensing scenario, sensing entities are classified into sensing entities (for example, Tx) that send sensing signals and sensing entities (for example, Rx) that receive sensing signals. The sensing signal may be the foregoing electromagnetic wave signal. The sensing entity that sends the sensing signal may be referred to as a sending sensing entity, and the sensing entity that receives the sensing signal may be referred to as a receiving sensing entity. The sensing signal received by the receiving sensing entity carries sensing data. In some scenarios, a sensing entity may serve as both a sending sensing entity and a receiving sensing entity. That is, a sensing entity may have both a function of sending a sensing signal and a function of receiving a sensing signal. For example, the sensing entity may perform self-sending and self-receiving.

The foregoing sensing entity may be deployed on a network device or a terminal device. In other words, network devices and/or terminal devices having the sensing capability may be used as sensing entities, and the sensing entities may include network devices and/or terminal devices having the sensing capability. Different sensing entities may form different sensing scenarios.

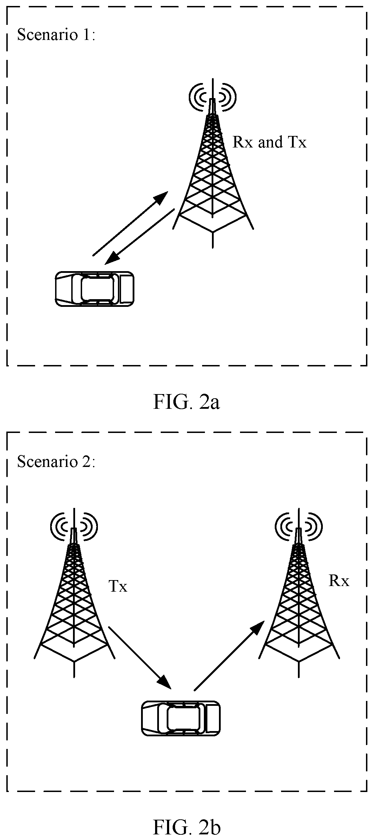

For example, FIG. 2a to FIG. 2f are diagrams of sensing scenarios according to an embodiment of this application. As shown in FIG. 2a to FIG. 2f, based on types of sensing entities, six sensing scenarios shown in FIG. 2a to FIG. 2f may be included.

In a scenario 1 shown in FIG. 2a, a network device (for example, a base station) may serve as a sensing entity that sends a sensing signal and a sensing entity that receives the sensing signal. That is, the network device may serve as both a transmit end (Tx) of the sensing signal and a receive end (Rx) of the sensing signal. The sensing signal sent by the network device reaches a target object (for example, a vehicle, a person, or another object, and a vehicle is used as an example in FIG. 2a to FIG. 2f). The sensing signal is reflected by the target object. The network device may receive the sensing signal, and may process the sensing signal to obtain a sensing result, for example, sensing data.

In a scenario 2 shown in FIG. 2b, a network device (for example, a base station 1) may serve as a sensing entity that sends a sensing signal, and another network device (for example, a base station 2) may serve as a sensing entity that receives the sensing signal. A transmit end (Tx) of the sensing signal and a receive end (Rx) of the sensing signal may be different network devices. The sensing signal sent by the network device 1 reaches a target object. The sensing signal is reflected by the target object. The network device 2 may receive the sensing signal, and may process the sensing signal to obtain a sensing result, for example, sensing data.

The sensing scenarios shown in FIG. 1(a) and FIG. 1(b) may be referred to as network device-based sensing scenarios, also referred to as BS-to-BS sensing scenarios.

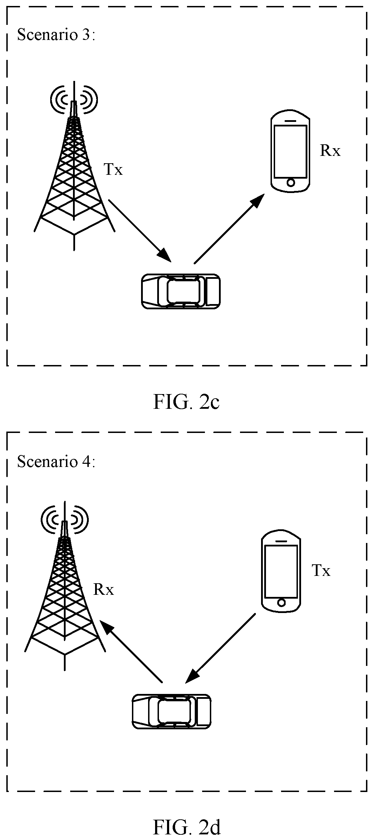

In a scenario 3 shown in FIG. 2c, a network device (for example, a base station) may serve as a sensing entity that sends a sensing signal, and a terminal device (for example, a mobile phone) may serve as a sensing entity that receives the sensing signal. A transmit end (Tx) of the sensing signal may be a network device, and a receive end (Rx) of the sensing signal may be a terminal device. The sensing signal sent by the network device reaches a target object. The sensing signal is reflected by the target object. The terminal device may receive the sensing signal, and may process the sensing signal to obtain a sensing result, for example, sensing data.

In a scenario 4 shown in FIG. 2d, a terminal device (for example, a mobile phone) may serve as a sensing entity that sends a sensing signal, and a network device (for example, a base station) may serve as a sensing entity that receives the sensing signal. A transmit end (Tx) of the sensing signal may be a terminal device, and a receive end (Rx) of the sensing signal may be a network device. The sensing signal sent by the terminal device reaches a target object. The sensing signal is reflected by the target object. The network device may receive the sensing signal, and may process the sensing signal to obtain a sensing result, for example, sensing data.

The sensing scenarios shown in FIG. 2c and FIG. 2d may be referred to as network device- and terminal device-based sensing scenarios, or the scenario 3 may be referred to as a BS-to-UE sensing scenario, and the scenario 4 may be referred to as a UE-to-BS sensing scenario.

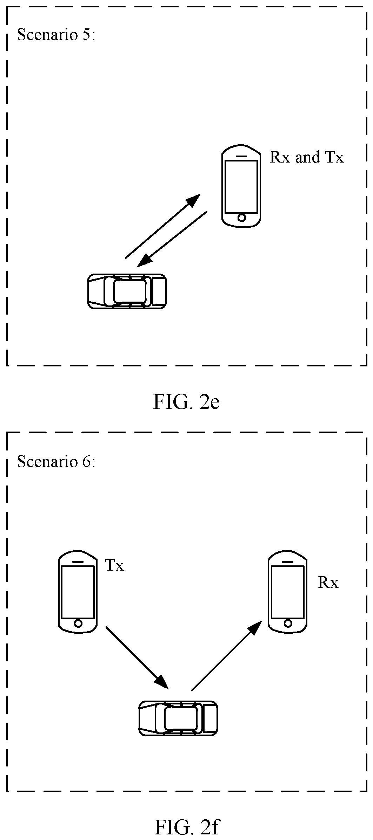

In a scenario 5 shown in FIG. 2e, a terminal device (for example, a mobile phone) may serve as a sensing entity that sends a sensing signal and a sensing entity that receives the sensing signal. That is, the terminal device may serve as both a transmit end (Tx) of the sensing signal and a receive end (Rx) of the sensing signal. The sensing signal sent by the terminal device reaches a target object. The sensing signal is reflected by the target object. The terminal device may receive the sensing signal, and may process the sensing signal to obtain a sensing result, for example, sensing data.

In a scenario 6 shown in FIG. 2f, a terminal device (for example, a mobile phone 1) may serve as a sensing entity that sends a sensing signal, and another terminal device (for example, a mobile phone 2) may serve as a sensing entity that receives the sensing signal. A transmit end (Tx) of the sensing signal and a receive end (Rx) of the sensing signal may be different terminal devices. The sensing signal sent by the terminal device 1 reaches a target object. The sensing signal is reflected by the target object. The terminal device 2 may receive the sensing signal, and may process the sensing signal to obtain a sensing result, for example, sensing data.

The sensing scenarios shown in FIG. 2e and FIG. 2f may be referred to as terminal device-based sensing scenarios, also referred to as UE-to-UE sensing scenarios.

The sensing signal sent by the transmit end may be referred to as a first sensing signal, and the sensing signal received by the receive end may be referred to as a second sensing signal. The second sensing signal carries more information than the first sensing signal. For example, the second sensing signal may carry source information and environment information.

Optionally, in embodiments of this application, for the network device, refer to the implementation of the RAN network element 110. The terminal device may also be referred to as user equipment (user equipment). In some examples, the terminal device may be a wireless terminal. The wireless terminal may be a device that provides a user with voice and/or other service data connectivity, a handheld device having a wireless connection function, or another processing device connected to a wireless modem. For example, the terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G or 6G mobile communication system, a terminal in a future evolved network, or the like.

It should be understood that specific product forms of the terminal device and the network device are not limited in this application.

Optionally, the SSCF network element 120 may also be referred to as a sensing control entity, a sensing service control network element, a sensing control network element, or the like. The SDPF network element 130 may also be referred to as a sensing processing entity, a sensing data processing network element, a sensing processing network element, or the like.

Names of the SSCF network element 120 and the SDPF network element 130 mentioned in this application are merely used as examples, and do not constitute a limitation. With development of communication technologies and sensing technologies, the two modules may have other names.

Optionally, in embodiments of this application, the SSCF network element 120 may be attached to an SBI bus through a service-based interface (service-based interface, SBI) to communicate with another core network functional module. The SDPF network element 130 may be exposed on the SBI bus through the SBI to communicate with another core network functional module, or may perform communication through a separate interface, for example, communicate with another SDPF network element 130 through a separate interface, or communicate with the SSCF network element 120 through a separate interface.

In a possible networking architecture, the RAN network element 110 is connected to the SSCF network element 120 via the access and mobility management function (access and mobility management function, AMF) network element 160, the RAN network element 110 is connected to the SDPF network element 120 via the user plane function (user plane function, UPF) 180, the SDPF network element 130 is exposed on the SBI bus through the SBI, and the SSCF network element 120 is exposed on the SBI bus through the SBI. The RAN network element 110 may perform control plane communication with the SSCF network element 120 via the AMF network element 160, and the RAN network element 110 may perform data plane communication with the SDPF network element 130 via the UPF network element 180.

In another possible networking architecture, the RAN network element 110 may be directly connected to the SSCF network element 120, the RAN network element 110 is connected to the SDPF network element 130 via the UPF network element 180, the SDPF network element 130 is exposed on the SBI bus through the SBI interface, and the SSCF network element 120 is not exposed on the SBI bus. The RAN network element 110 may directly perform control plane communication with the SSCF network element 120, and the RAN network element 110 may perform data plane communication with the SDPF network element 130 via the UPF network element 180.

In still another possible networking architecture, the RAN network element 110 is connected to the SSCF network element 120 via the AMF network element 160, the RAN network element 110 is connected to the SDPF network element 130 via the UPF network element 180, the SDPF network element 130 is not exposed on the SBI bus, and the SSCF network element 120 is exposed on the SBI bus through the SBI. The RAN network element 110 may perform control plane communication with the SSCF network element 120 via the AMF network element 160, and the RAN network element 110 may perform data plane communication with the SDPF network element 130 via the UPF network element 180.

In still another possible networking architecture, the RAN network element 110 may be directly connected to the SSCF network element 120, the RAN network element 110 is connected to the SDPF network element 130 via the UPF network element 180, the SDPF network element 130 is not exposed on the SBI bus, and the SSCF network element 120 is not exposed on the SBI bus. The RAN network element 110 may directly perform control plane communication with the SSCF network element 120, and the RAN network element 110 may perform data plane communication with the SDPF network element 130 via the UPF network element 180.

In still another possible networking architecture, the RAN network element 110 is connected to the SSCF network element 120 via the AMF network element 160, the RAN network element 110 may be directly connected to the SDPF network element 130, the SDPF network element 130 is exposed on the SBI bus through the SBI, and the SSCF network element 120 is exposed on the SBI bus through the SBI. The RAN network element 110 may perform control plane communication with the SSCF network element 120 via the AMF network element 160, and the RAN network element 110 may directly perform data plane communication with the SDPF network element 130.

In still another possible networking architecture, the RAN network element 110 may be directly connected to the SSCF network element 120, the RAN network element 110 may be directly connected to the SDPF network element 130, the SDPF network element 130 is exposed on the SBI bus through the SBI, and the SSCF network element 120 is not exposed on the SBI bus. The RAN network element 110 may directly perform control plane communication with the SSCF network element 120, and the RAN network element 110 may directly perform data plane communication with the SDPF network element 130.

In still another possible networking architecture, the RAN network element 110 is connected to the SSCF network element 120 via the AMF network element 160, the RAN network element 110 may be directly connected to the SDPF network element 130, the SDPF network element 130 is not exposed on the SBI bus, and the SSCF network element 120 is exposed on the SBI bus through the SBI. The RAN network element 110 may perform control plane communication with the SSCF network element 120 via the AMF network element 160, and the RAN network element 110 may directly perform data plane communication with the SDPF network element 130.

In still another possible networking architecture, the RAN network element 110 may be directly connected to the SSCF network element 120, the RAN network element 110 may be directly connected to the SDPF network element 130, the SDPF network element 130 is not exposed on the SBI bus, and the SSCF network element 120 is not exposed on the SBI bus. The RAN network element 110 may directly perform control plane communication with the SSCF network element 120, and the RAN network element 110 may directly perform data plane communication with the SDPF network element 130.

As described above, in embodiments of this application, the RAN network element 110 may directly perform control plane communication with the SSCF network element 120, or may perform control plane communication with the SSCF network element 120 via the AMF network element 160. The SDPF network element 130 may be exposed on the SBI bus, or may not be exposed on the SBI bus. The RAN network element 110 may directly perform data plane communication with the SDPF network element 130, or may perform data plane communication with the SDPF network element 120 via the UPF network element 180. The control plane communication refers to transmission of a control plane message, for example, a control message in embodiments of this application. The data plane communication refers to transmission of sensing data and/or a sensing result. Interaction between network elements such as the RAN network element 110, the SSCF network element 120, and the SDPF network element 130 in the foregoing embodiments of this application may be implemented based on any one of the foregoing possible networking architectures. This is not limited in this application.

Optionally, the SSCF network element 120 and the SDPF network element 130 may be independently upgraded and maintained, so that core network function entities can be flexibly deployed and managed in a network. During actual implementation, a quantity of SDPF network elements 130 may be further increased or decreased based on an actual requirement.

The NRF network element 140 shown in FIG. 1 may be configured to manage and maintain information about various services and resources in the network. For example, the NRF network element 140 is responsible for maintaining registration information of all available services and resources in the network, and providing the information for other network elements, so that they can discover and use the services and resources.

For example, the SSCF network element 120 may register, with the NRF network element 140, services that can be provided by the SSCF network element 120. The SDPF network element 130 may provide a data exposure interface for the NRF network element 140.

The SEPP 150 shown in FIG. 1 can ensure transmission security between different operator networks. The operator network is also referred to as a public land mobile network (public land mobile network, PLMN). An SEPP 150 may be deployed in a PLMN of each operator. For example, when cross-network transmission of signaling is performed between different PLMNs, the signaling needs to be forwarded via the SEPP 150. The SEPP 150 may be responsible for security protection of the cross-network signaling, to implement network topology hiding. For example, the SEPP 150 may replace fully qualified domain name (fully qualified domain name, FQDN) of each network element in the signaling with a telescopic (telescopic) FQDN, and forward the telescopic FQDN to another PLMN. An interface between SEPPs may be referred to as an N32 interface.

The AMF network element 160 may be responsible for managing user access and mobility management, including functions such as user access control, mobility management, and security.

The SMF network element 170 may be responsible for session management, including functions such as policy control, session management, and user plane quality of service (quality of service, QoS) control.

The UPF network element 180 may be responsible for processing user data packets, including functions such as traffic control, data packet processing, and QoS policy execution. An interface through which different UPF network elements can communicate with each other may be referred to as an N9 interface. For example, two different UPF network elements in a same operator network may communicate with each other through an N9 interface. For another example, a UPF network element in an operator network A and a UPF network element in an operator network B may directly communicate with each other through an N9 interface.

In embodiments of this application, for a communication system of each operator network, refer to FIG. 1. Communication systems of different operator networks may be the same or different. For any operator network, the communication system shown in FIG. 1 may include but is not limited to: a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access (code division multiple access, CDMA) 2000 system, a time division-synchronization code division multiple access (time division-synchronization code division multiple access, TD-SCDMA) system, a long term evolution (long term evolution, LTE) system, a 5G mobile communication system, a next-generation 5G mobile communication system, an enhanced mobile broadband (enhanced Mobile Broadband, eMBB) system, an ultra-reliable low-latency communication (ultra-reliable low-latency communication, URLLC) system, a massive machine-type communications (Massive Machine-Type Communications, mMTC) system, a long range (long range, LoRa) internet of things system, an internet of vehicles system, a future 6G communication system, or another evolved communication system. A type of the communication system is not limited in this application.

Optionally, the communication system of each operator network may further include more or fewer network elements than those shown in FIG. 1. For example, the communication system may further include a unified user/data management (unified data management, UDM) network element, a policy control function (policy control function, PCF) network element, a sensing service subscriber management (sensing service subscriber management, SSSM) network element, a network exposure function (network exposure function, NEF) network element, and the like.

Optionally, in the communication system of each operator network, different network elements may also be co-deployed, or may be separately deployed. For example, the SSCF network element 120 and the SDPF network element 130 may be integrated together, or may be separately deployed, or may be deployed together with another core network functional module. After the control plane functions of the sensing services and the data plane functions of the sensing services are deployed independently, a quantity of control plane function entities and a quantity of data plane function entities may be flexibly configured and adjusted based on resources and service statuses. Then, attacks on the data plane do not affect the control plane. This improves reliability and security of the sensing services.

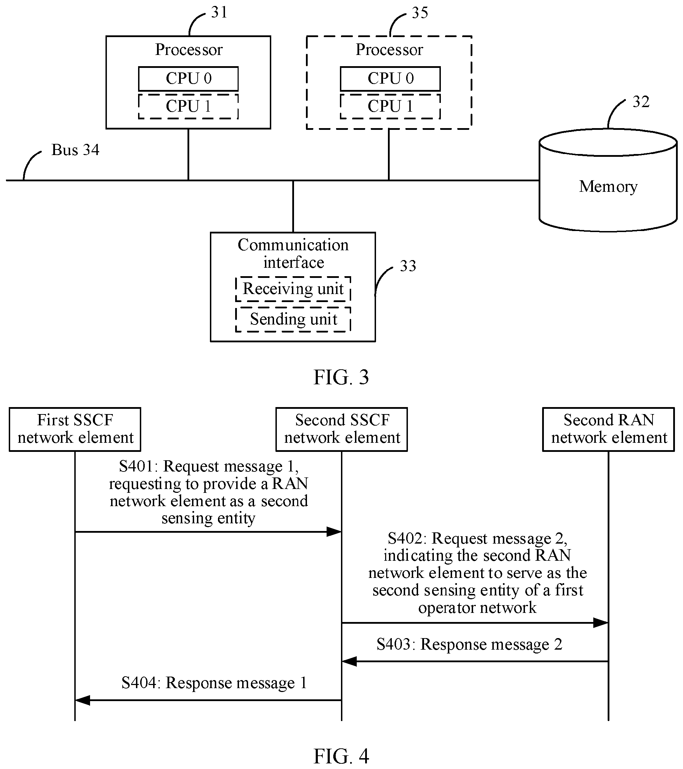

For example, FIG. 3 is a diagram of composition of a communication device according to an embodiment of this application. The communication device may be a network device or a terminal device. The network device may be the foregoing sensing entity or a device deployed with the sensing entity, or may be any network element in embodiments of this application or a device that carries or is deployed with the network element, for example, the RAN network element, the SSCF network element, the SDPF network element, the UPF network element, the AMF network element, or the NRF network element. Details are not described again.

As shown in FIG. 3, the communication device may include at least one processor 31, a memory 32, a communication interface 33, and a bus 34.

The processor 31 is a control center of the communication device, and may be one processor or may be a collective name of multiple processing elements. For example, the processor 31 may be a central processing unit (central processing unit, CPU), or may be an application-specific integrated circuit (application-specific integrated circuit, ASIC), or may be configured as one or more integrated circuits implementing embodiments of this application, for example, one or more microprocessors (digital signal processors, DSPs), or one or more field programmable gate arrays (field programmable gate arrays, FPGAs).

The processor 31 may perform various functions of the communication device by running or executing a software program stored in the memory 32 and invoking data stored in the memory 32. For example, when the communication device is a network element or a device that carries the network element in the communication method provided in embodiments of this application, the communication device may perform steps performed by the network element in the communication method provided in embodiments of this application.

During specific implementation, in an embodiment, the processor 31 may include one or more CPUs, for example, a CPU 0 and a CPU 1 shown in FIG. 3.

During specific implementation, in an embodiment, the communication device may include multiple processors, for example, the processor 31 and a processor 35 shown in FIG. 3. Each of the processors may be a single-core processor (single-CPU), or may be a multi-core processor (multi-CPU). The processor herein may be one or more devices, circuits, and/or processing cores configured to process data (for example, computer program instructions).

The memory 32 may store a software program of the steps in the method performed by the communication device, and the processor 31 controls execution of the software program. The memory 32 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto.

The memory 32 may exist independently and be connected to the processor 31 through the bus 34. Alternatively, the memory 32 may be integrated with the processor 31. This is not limited herein.

The communication interface 33 is configured to communicate with another device or a communication network by using any apparatus like a transceiver. The communication interface 33 may include an Ethernet interface, a radio access network (radio access network, RAN) interface, a wireless local area network (wireless local area network, WLAN) interface, or the like. The communication interface 33 may include a receiving unit for implementing a receiving function and a sending unit for implementing a sending function.

The bus 34 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 3, but this does not mean that there is only one bus or only one type of bus.

Although the bus 34 is used in FIG. 3, it may be understood that the bus may also be replaced with a connection relationship in another form, and is not limited to the bus itself.

Optionally, any network element or a device that carries or is deployed with the network element in embodiments of this application may include more or fewer components than those shown in FIG. 3. This is not limited herein.

The following describes the communication method provided in embodiments of this application by using examples. Processing described below as being performed by a single execution body may alternatively be performed by multiple execution bodies. These execution bodies may be logically and/or physically separated. It should be further understood that with evolution of network architectures and emergence of new service scenarios, the technical solutions provided in embodiments of this application are also applicable to similar technical problems.

It should be noted that, in the descriptions of embodiments of this application, words such as "first" and "second" are merely intended for distinguishing descriptions, and are not used to specially limit a feature. That is, "first" or "second" may include more content, but is not limited to a specific concept. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects. "At least one" means one or more, and "multiple" means two or more. In embodiments of this application, only fewer steps than all the steps may be performed, or more steps may be performed. This is not limited. "At least one of the following" or a similar expression thereof represents any combination of the listed items. For example, at least one of A, B, and (or) C may represent the following cases: Only A exists, only B exists, only C exists, both A and B exist, both B and C exist, both A and C exist, and A, B, and C all exist, where A, B, and C may be singular or plural.

Unless otherwise defined, all technical and scientific terms used in this specification have same meanings as those usually understood by a person skilled in the art of this application. The terms used in the specification of this application are merely for the purpose of describing specific embodiments, but are not intended to limit this application.

For example, in the following embodiments of this application, steps performed by each network element (for example, an SSCF network element, an SDPF network element, a RAN network element, and a UPF network element) may be specifically performed by a communication device that carries or is deployed with the network element, or an apparatus (for example, a software module or a chip) built in the communication device that carries or is deployed with the network element. The communication device may be a network device or a terminal device.

In the communication method provided in embodiments of this application, a first operator network may obtain sensing data by using a sensing entity in a second operator network. The first operator network is different from the second operator network. For example, an SSCF network element (referred to as a first SSCF network element below) in the first operator network may communicate with an SSCF network element (referred to as a second SSCF network element below) in the second operator network, to request the sensing entity in the second operator network to assist in obtaining the sensing data. The sensing entity in the second operator network may be an access network element (for example, a base station) or a terminal device in the second operator network, which are collectively referred to as a second RAN network element below for description. A sensing entity in the first operator network may be an access network element (for example, a base station) or a terminal device in the first operator network, which are collectively referred to as a first RAN network element below for description.

In the communication method, the first SSCF network element may send a request message to the second SSCF network element, to request the second SSCF network element to provide the sensing entity in the second operator network to perform a sensing task. The second SSCF network element may send the request message to the second RAN network element, to request the second RAN network element to serve as the sensing entity of the first operator network, and send a response message to the first SSCF network element, to notify the first SSCF network element that the second RAN network element may be provided as the sensing entity.

For example, FIG. 4 is a schematic flowchart of a communication method according to an embodiment of this application. As shown in FIG. 4, the communication method may include S401 to S404.

S401: A first SSCF network element sends a request message 1 to a second SSCF network element, where the request message 1 indicates to request a second operator network to provide a RAN network element as a second sensing entity for a first operator network.

Correspondingly, the second SSCF network element receives the request message 1.

For example, the first SSCF network element belongs to the first operator network. A data requester of sensing data, for example, a third-party entity in the first operator network or a network function (network function, NF) network element inside a network, may request the first SSCF network element to perform sensing task orchestration, to obtain the sensing data. For meanings of the third-party entity and the NF network element, refer to the descriptions in the foregoing embodiments. Details are not described again. For example, the data requester may request the first SSCF network element to obtain sensing data of a sensing service 1. The first SSCF network element may select a sending sensing entity and a receiving sensing entity to perform a sensing task, to obtain the sensing data. For example, the first SSCF network element may separately send a control message (or referred to as a sensing control message) to the sending sensing entity and the receiving sensing entity, to indicate the sending entity to send a sensing signal, and indicate the receiving sensing entity to receive a sensing signal. The sensing signal received by the receiving sensing entity carries the sensing data.

In this embodiment of this application, the first SSCF network element may send the request message 1 to the second SSCF network element, to request the second operator network to provide, for the first operator network, the RAN network element as the sensing entity to perform a sensing task. The sensing entity provided by the second operator network may be referred to as a second sensing entity. A sensing entity in the first operator network may be referred to as a first sensing entity.

In a possible scenario, the first SSCF network element may request the second operator network to provide the receiving sensing entity, and the second sensing entity may serve as the receiving sensing entity to receive the sensing signal, and obtain the sensing data based on the received sensing signal. When the second sensing entity serves as the receiving sensing entity, a sending sensing entity may be the first sensing entity in the first operator network. That is, the first sensing entity is configured to send the sensing signal, and the second sensing entity is configured to receive the sensing signal. There may be one or more second sensing entities.

In another possible scenario, the first SSCF network element may request the second operator network to provide the sending sensing entity, and the second sensing entity may serve as the sending sensing entity to send the sensing signal. When the second sensing entity serves as the sending sensing entity, the receiving sensing entity may be the first sensing entity in the first operator network. That is, the second sensing entity is configured to send the sensing signal, and the first sensing entity is configured to receive the sensing signal. The first sensing entity may obtain the sensing data based on the received sensing signal. There may also be one or more second sensing entities.

In still another possible scenario of this design, the first SSCF network element may request the second operator network to provide the sending sensing entity and a sensing entity. The second sensing entity may serve as a sending sensing entity to send a sensing signal, and also serve as a receiving sensing entity to receive a sensing signal, that is, the second sensing entity performs self-sending and self-receiving. Alternatively, some second sensing entities serve as sending sensing entities to send sensing signals, and some second sensing entities serve as receiving sensing entities to receive sensing signals. There may also be one or more second sensing entities.

For example, the request message 1 may include at least one of the following information: a sensing service identifier, a sensing area, sensing data requirement information, and sensing entity requirement information.

The sensing service indicates a sensing service, for example, may be an identifier of the sensing service 1. The sensing service identifier may also be referred to as a sensing identifier (sensing identifier).

A sensing service area indicates a sensing range of the second sensing entity. The second SSCF network element may determine the second sensing entity based on the sensing area, for example, select a sensing entity whose signal can cover the sensing area as the second sensing entity. The sensing service area may also be referred to as a service area (service zone).

The sensing data requirement information indicates a sensing data requirement of the sensing service. For example, the sensing data requirement may be a precision requirement, a data quality requirement, or the like. The second SSCF network element may alternatively select a proper sensing entity as the second sensing entity based on the sensing data requirement information.

The sensing entity requirement (SE requirement) information indicates a sensing entity type of the second sensing entity, and the sensing entity type includes a sending sensing entity and/or a receiving sensing entity. The second SSCF network element may select, based on the sensing entity requirement information, a sending sensing entity and/or a receiving sensing entity as the second sensing entity. For details, refer to different implementation scenarios of the second sensing entity.

Optionally, the sensing entity requirement information may further indicate a quantity of sensing entities that need to be provided. Alternatively, the second SSCF network element may determine a quantity of second sensing entities based on the sensing data requirement information. This is not limited herein.

After receiving the request message 1, the second SSCF network element may select, based on the information included in the request message 1, the second RAN network element as the second sensing entity of the first operator network, and perform the following S402. As described above, there are one or more second RAN network elements, and only one second RAN network element is used as an example for description in this specification.

For example, the second SSCF network element may select the second sensing entity based on sensing capability information of each sensing entity in the second operator network. For example, the request message 1 indicates that the receiving sensing entity needs to be provided as the second sensing entity, and the sensing service is a first sensing service in an area 1. If current longitude and latitude information of a sensing entity a in the second operator network is within a range of the area 1, and a role identifier of the sensing entity a is a receiving sensing entity, the second SSCF network element may select the sensing entity a as the second sensing entity. The sensing entity a may be referred to as a second RAN network element.

Optionally, in embodiments of this application, the sensing capability information of the sensing entity may include a device identifier, a role identifier, a device type, geographical location information, a sensing processing capability, a supported sensing service type, and the like.

The device identifier uniquely identifies the sensing entity. For example, the first sensing entity is a terminal device, and the device identifier may be an international mobile equipment identity (International mobile equipment identity, IMEI), a subscription permanent identifier (subscription permanent identifier, SUPI), a subscription concealed identifier (subscription concealed identifier, SUCI), a media access control (media access control, MAC) address, or the like. For another example, the first sensing entity is a network device, the device identifier may be a cell identity and/or a tracking area identity (tracking area identity, TAI), or the like, and the cell identity may be, for example, a physical cell identifier (physical cell identifier, PCI).

The role identifier indicates that the sensing entity is a sending sensing entity and/or a receiving sensing entity.

The device type indicates that the sensing entity is a network device or a terminal device. Optionally, if the sensing entity is a network device, the device type may further indicate that the network device is a base station, a CU, a DU, or the like. If the sensing entity is a terminal device, the device type may further indicate that the terminal device is UE, an internet of things device, a flight device, a VR device, or the like.

The geographical location information may indicate one or more of the following: a current geographical location of the sensing entity, and a geographical location range that can be sensed by the sensing entity. The geographical location is, for example, longitude and latitude information and global positioning system (global positioning system, GPS) location information.

The sensing processing capability indicates that the sensing entity has one or more of a layer 1 (layer 1, L1) sensing capability, a layer 2 (layer 2, L2) sensing capability, and a layer 3 (layer 3, L3) sensing capability.

The L1 sensing capability is used to sense raw data. The raw data is basic information of a sensing signal, for example, one or more of an amplitude, a phase, and whether the sensing signal is an in-phase signal or a quadrature signal.

The L2 sensing capability is used to sense measurement data. The measurement data is data that is obtained by processing the raw data and that indicates a measurement dimension, and may include but is not limited to one or more of delays of sampling points, a receiving angle of the sensing signal, signal strength of the sensing signal, Doppler (to be specific, an offset of a frequency of the sensing signal), a location of a target object, a speed of the target object, and other information. The sampling points are signal values, at some specific moments or locations, that are selected when discretization processing is performed on continuous signals in a signal processing process.

The L3 sensing capability is used to process sensing data to obtain a sensing result. The sensing data may be raw data and/or measurement data, and the sensing result may include but is not limited to one or more of a distance between the sensing entity and the target object, the speed of the target object, the location of the target object, an angle between the sensing entity and the target object, a movement path of the target object, a breathing frequency of the target object, heartbeats of the target object, and other information.

The supported sensing service type indicates a sensing service type that can be provided by the sensing entity, and may include but is not limited to one or more of the following types: an environment category, a monitoring category, an imaging category, a positioning category, and the like. The environment category may include but is not limited to one or more of an ambient temperature, ambient humidity, air quality, a weather condition, crowd density, vehicle flow density, atmospheric pressure, and the like. The monitoring category may include but is not limited to one or more of movement monitoring, intrusion monitoring, fall monitoring, health monitoring, and other monitoring. The movement monitoring may include but is not limited to one or more of distance monitoring, location monitoring, movement speed monitoring, movement path monitoring, and the like. The health monitoring may include but is not limited to one or more of a breathing frequency, heartbeats, and other information. The imaging category may include but is not limited to one or more of medical imaging, 3D map imaging, 3D map construction, building imaging, body temperature imaging, and the like.

A specific manner in which the second SSCF network element selects the second sensing entity is not limited in this application.

Optionally, the information included in the request message 1 may alternatively be sent to the SSCF through another message or in another manner. This is not limited in this application either.

For example, the request message 1 may be an "Nsscf_SensingService_Request" interface message.

S402: The second SSCF network element sends a request message 2 to the second RAN network element, where the request message 2 indicates the second RAN network element to serve as the second sensing entity of the first operator network.

Correspondingly, the second RAN network element receives the request message 2.

As described above, the second RAN network element is the second sensing entity selected by the second SSCF network element.

For example, the request message 2 may also include at least one of the following information: the sensing service identifier, the sensing area, and the sensing data requirement information. The second RAN network element may perform the sensing task based on the information included in the request message 2. Details are not described again.

Optionally, in this embodiment of this application, the request message 2 may further include role type (role type) information, which is also referred to as sensing role information or sensing entity type information. The role type information indicates that the second RAN network element needs to serve as a sending sensing entity and/or a receiving sensing entity. For details, refer to the foregoing descriptions.

For example, the request message 2 may be an "Ns_Sensing_Request" interface message.

S403: The second RAN network element sends a response message 2 to the second SSCF function network element.

Optionally, the response message 2 indicates that the second RAN network element is acknowledged as the second sensing entity of the first operator network.

Correspondingly, the second SSCF network element receives the response message 2.

For example, the response message 2 may be an "Ns_Sensing_Response" interface message.

S404: The second SSCF network element sends a response message 1 to the first SSCF network element.

Optionally, the response message 1 may indicate that the second RAN network element is provided as the second sensing entity of the first operator network.

Correspondingly, the first SSCF network element receives the response message 1.

For example, the response message 1 may be an "Nsscf_SensingService_Response" interface message.

According to the procedure shown in FIG. 4, a relationship may be established between the second RAN network element in the second operator network and the first operator network (or the first SSCF network element), so that the first operator network can obtain the sensing data by using the second RAN network element in the second operator network as the second sensing entity.

It should be understood that, in the foregoing scenario in which the second sensing entity (the second RAN network element) serves as the receiving sensing entity, the first sensing entity is configured to send the sensing signal, and the second sensing entity is configured to receive the sensing signal, the first SSCF network element may further send a request message (or referred to as a control message) to a first RAN network element in the first operator network, to request the first RAN network element to serve as a sending sensing entity. There may be one or more first RAN network elements.

In the foregoing scenario in which the second sensing entity (the second RAN network element) serves as the sending sensing entity, the second sensing entity is configured to send the sensing signal, and the first sensing entity is configured to receive the sensing signal, the first SSCF network element may further send a request message to a first RAN network element in the first operator network, to request the first RAN network element to serve as a receiving sensing entity. There may be one or more first RAN network elements.

In the foregoing scenario in which the second sensing entity serves as the sending entity and the sensing entity to perform self-sending and self-receiving, and in the foregoing scenario in which some second sensing entities serve as the sending sensing entities and some second sensing entities serves as the receiving sensing entities, the first SSCF network element may also send a request message to a first RAN network element in the first operator network, to request the first RAN network element to serve as a first sensing entity. In this case, a sensing entity type of the first RAN network element is similar to that of the second RAN network element. The first RAN network element may perform self-sending and self-receiving, or some first RAN network elements serve as sending sensing entities and some first RAN network elements serve as receiving sensing entities. Details are not described again. There may be one or more first RAN network elements.

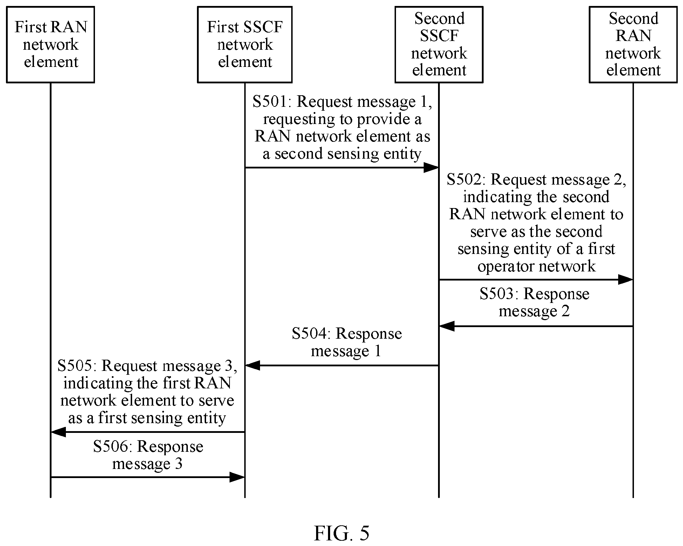

For example, FIG. 5 is another schematic flowchart of a communication method according to an embodiment of this application. As shown in FIG. 5, the communication method may include S501 to S506.

S501: A first SSCF network element sends a request message 1 to a second SSCF network element, where the request message 1 indicates to request a second operator network to provide a RAN network element as a second sensing entity for a first operator network.

Correspondingly, the second SSCF network element receives the request message 1.

S502: The second SSCF network element sends a request message 2 to the second RAN network element, where the request message 2 indicates the second RAN network element to serve as the second sensing entity of the first operator network.

Correspondingly, the second RAN network element receives the request message 2.

S503: The second RAN network element sends a response message 2 to the second SSCF function network element.

Correspondingly, the second SSCF network element receives the response message 2.

S504: The second SSCF network element sends a response message 1 to the first SSCF network element.

Correspondingly, the first SSCF network element receives the response message 1.

For S501 to S504, refer to S404 to S404. Details are not described again.

S505: The first SSCF network element sends a request message 3 to a first RAN network element, where the request message 3 indicates the first RAN network element to serve as a first sensing entity.

Correspondingly, the first RAN network element receives the request message 3.

For descriptions of the first sensing entity, refer to the descriptions in the foregoing different implementation scenarios of the second sensing entity. Details are not described.

For example, the request message 3 may also include at least one of the following information: a sensing service identifier, a sensing area, and sensing data requirement information. The first RAN network element may perform a sensing task based on the information included in the request message 3. Details are not described either.

Optionally, in this embodiment of this application, the request message 3 may further include role type (role type) information, which is also referred to as sensing role information or sensing entity type information. The role type information indicates that the first RAN network element needs to serve as a sending sensing entity and/or a receiving sensing entity.

For example, the request message 3 may be an "Ns_Sensing_Request" interface message.

S506: The first RAN network element sends a response message 3 to the first SSCF network element.

Optionally, the response message 3 indicates that the first RAN network element is acknowledged as the first sensing entity.

Correspondingly, the first SSCF network element receives the response message 3.

For example, the response message 3 may be an "Ns_Sensing_Response" interface message.

Optionally, S505 and S506 may alternatively be performed before S501 to S504, and an execution sequence is not limited.

In a possible design, in the foregoing scenario in which the second sensing entity (the second RAN network element) serves as the receiving sensing entity, the first sensing entity is configured to send the sensing signal, and the second sensing entity is configured to receive the sensing signal, the first SSCF network element may further obtain a spectrum resource (for example, frequency information) used by the first RAN network element to send the sensing signal. The spectrum resource is also referred to as a spectrum resource carrying the sensing signal. The first SSCF network element may send, to the second SSCF network element, the spectrum resource carrying the sensing signal, and the second SSCF network element may send, to the second RAN network element, the spectrum resource carrying the sensing signal, so that the second RAN network element can receive the sensing signal based on the spectrum resource carrying the sensing signal.

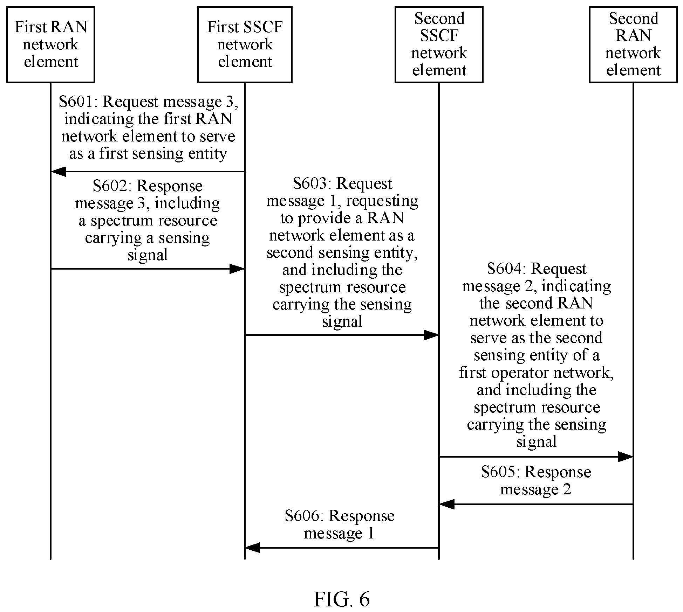

For example, FIG. 6 is still another schematic flowchart of a communication method according to an embodiment of this application. As shown in FIG. 6, the communication method may include S601 to S606.

S601: A first SSCF network element sends a request message 3 to a first RAN network element, where the request message 3 indicates the first RAN network element to serve as a first sensing entity.

Correspondingly, the first RAN network element receives the request message 3.

S602: The first RAN network element sends a response message 3 to the first SSCF network element, where the response message 3 includes a spectrum resource carrying a sensing signal.

For example, the response message 3 may include one or more fields, indicating spectrum resource information (frequency resource info) carrying the sensing signal.

Correspondingly, the first SSCF network element receives the response message 3.

For S601 and S602, refer to S505 and S506. A difference lies in that the response message 3 carries or indicates the spectrum resource carrying the sensing signal. Details are not described again.

S603: The first SSCF network element sends a request message 1 to a second SSCF network element, where the request message 1 indicates to request a second operator network to provide a RAN network element as a second sensing entity for a first operator network, and the request message 1 includes the spectrum resource carrying the sensing signal.

Correspondingly, the second SSCF network element receives the request message 1.

S604: The second SSCF network element sends a request message 2 to a second RAN network element, where the request message 2 indicates the second RAN network element to serve as the second sensing entity of the first operator network, and the request message 2 includes the spectrum resource carrying the sensing signal.

Correspondingly, the second RAN network element receives the request message 2.

S605: The second RAN network element sends a response message 2 to the second SSCF function network element.

Correspondingly, the second SSCF network element receives the response message 2.

S606: The second SSCF network element sends a response message 1 to the first SSCF network element.

Correspondingly, the first SSCF network element receives the response message 1.

For S603 to S606, refer to S401 to S404 or S501 to S504. A difference lies in that the request message 1 and the request message 2 carry or indicate the spectrum resource carrying the sensing signal. Details are not described again.

It should be noted that, in the procedure shown in FIG. 6, S601 and S602 need to be performed before S603 to S606, so that the first SSCF network element can obtain the spectrum resource carrying the sensing signal, to send the spectrum resource carrying the sensing signal to the second SSCF network element.

In the procedure shown in FIG. 6, the first SSCF network element may obtain, through the response message 3 sent by the first RAN network element, the spectrum resource carrying the sensing signal, and send the spectrum resource to the second SSCF network element. Optionally, the first SSCF network element may alternatively obtain, in another manner, the spectrum resource used by the first sensing entity (the first RAN network element) to send the sensing signal. For example, the first RAN network element may alternatively send, to the first SSCF network element through another message, the spectrum resource carrying the sensing signal. Similarly, the spectrum resource carrying the signal may also be sent between the first SSCF and the second SSCF network element, and between the second SSCF network element and the second RAN network element through another message or in another manner. This is not limited in this application.

In a possible design, in the foregoing scenario in which the second sensing entity (the second RAN network element) serves as the sending sensing entity, the second sensing entity is configured to send the sensing signal, and the first sensing entity is configured to receive the sensing signal, the second SSCF network element may further obtain the spectrum resource (for example, frequency information) used by the second RAN network element to send the sensing signal. The spectrum resource is also referred to as a spectrum resource carrying the sensing signal. The second SSCF network element may send, to the first SSCF network element, the spectrum resource carrying the sensing signal, and the first SSCF network element may send, to the first RAN network element, the spectrum resource carrying the sensing signal, so that the first RAN network element can receive the sensing signal based on the spectrum resource carrying the sensing signal.

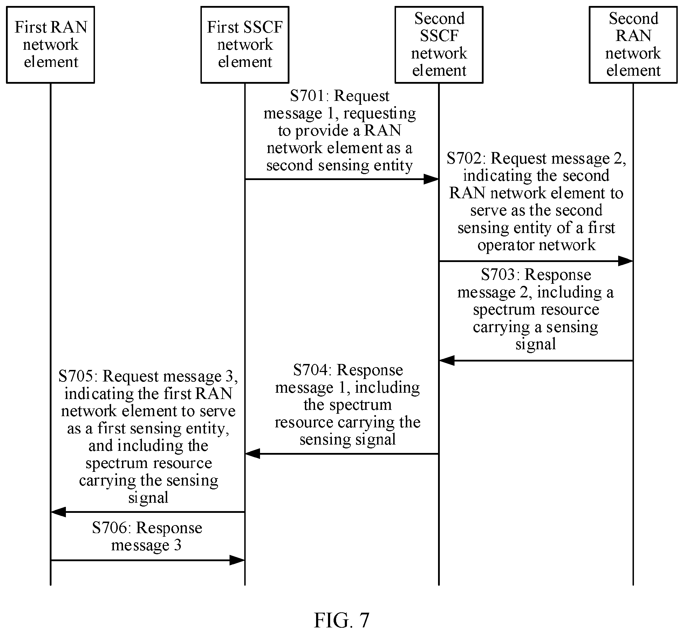

For example, FIG. 7 is still another schematic flowchart of a communication method according to an embodiment of this application. As shown in FIG. 7, the communication method may include S701 to S706.

S701: A first SSCF network element sends a request message 1 to a second SSCF network element, where the request message 1 indicates to request a second operator network to provide a RAN network element as a second sensing entity for a first operator network.

Correspondingly, the second SSCF network element receives the request message 1.

S702: The second SSCF network element sends a request message 2 to the second RAN network element, where the request message 2 indicates the second RAN network element to serve as the second sensing entity of the first operator network.

Correspondingly, the second RAN network element receives the request message 2.

S703: The second RAN network element sends a response message 2 to the second SSCF function network element, where the response message 2 includes a spectrum resource carrying a sensing signal.

Correspondingly, the second SSCF network element receives the response message 2.

S704: The second SSCF network element sends a response message 1 to the first SSCF network element, where the response message 1 includes the spectrum resource carrying the sensing signal.

Correspondingly, the first SSCF network element receives the response message 1.

For S701 to S704, refer to S401 to S404 or S501 to S504. A difference lies in that the response message 2 and the response message 1 carry or indicate the spectrum resource carrying the sensing signal. Details are not described again.

S705: The first SSCF network element sends a request message 3 to a first RAN network element, where the request message 3 indicates the first RAN network element to serve as a first sensing entity, and the request message 3 includes the spectrum resource carrying the sensing signal.

Correspondingly, the first RAN network element receives the request message 3.

S706: The first RAN network element sends a response message 3 to the first SSCF network element.

Correspondingly, the first SSCF network element receives the response message 3.

For S705 and S706, refer to S505 and S506. A difference lies in that the request message 3 carries or indicates the spectrum resource carrying the sensing signal. Details are not described again.

It should be noted that, in the procedure shown in FIG. 7, S701 to S704 need to be performed before S705 and S706, so that the first SSCF network element can obtain the spectrum resource carrying the sensing signal, to send the spectrum resource carrying the sensing signal to the first SSCF network element.

In the procedure shown in FIG. 7, the second SSCF network element may obtain, through the response message 2 sent by the second RAN network element, the spectrum resource carrying the sensing signal, and send the spectrum resource to the first SSCF network element. Optionally, the second SSCF network element may alternatively obtain, in another manner, the spectrum resource used by the second sensing entity (the second RAN network element) to send the sensing signal. For example, the second RAN network element may alternatively send, to the second SSCF network element through another message, the spectrum resource carrying the sensing signal. Similarly, the spectrum resource carrying the signal may also be sent between the first SSCF and the second SSCF network element, and between the first SSCF network element and the first RAN network element through another message or in another manner. This is not limited in this application either.

Optionally, in the foregoing scenario in which the second sensing entity serves as the sending entity and the sensing entity to perform self-sending and self-receiving, the second RAN network element may know a spectrum resource carrying a sensing signal. In the scenario in which some second sensing entities serve as the sending sensing entities and some second sensing entities serve as the receiving sensing entities, inside a second operator network, a spectrum resource carrying a sensing signal may be synchronized among different RAN network elements. A manner of synchronizing the spectrum resource is not limited in this application.

Based on the foregoing embodiment, after determining sensing entities (for example, the first sensing entity and the second sensing entity), the first SSCF network element may send a sensing request message to the sending sensing entity, to indicate the sending sensing entity to start to send a sensing signal, so as to perform a sensing task. Accordingly, the receiving sensing entity may receive the sensing signal to obtain sensing data.

For example, in the foregoing scenario in which the second sensing entity (the second RAN network element) serves as the receiving sensing entity, the first sensing entity is configured to send the sensing signal, and the second sensing entity is configured to receive the sensing signal, the first SSCF network element may send a sensing request message 1 to the first RAN network element, to request the first RAN network element to perform sensing.

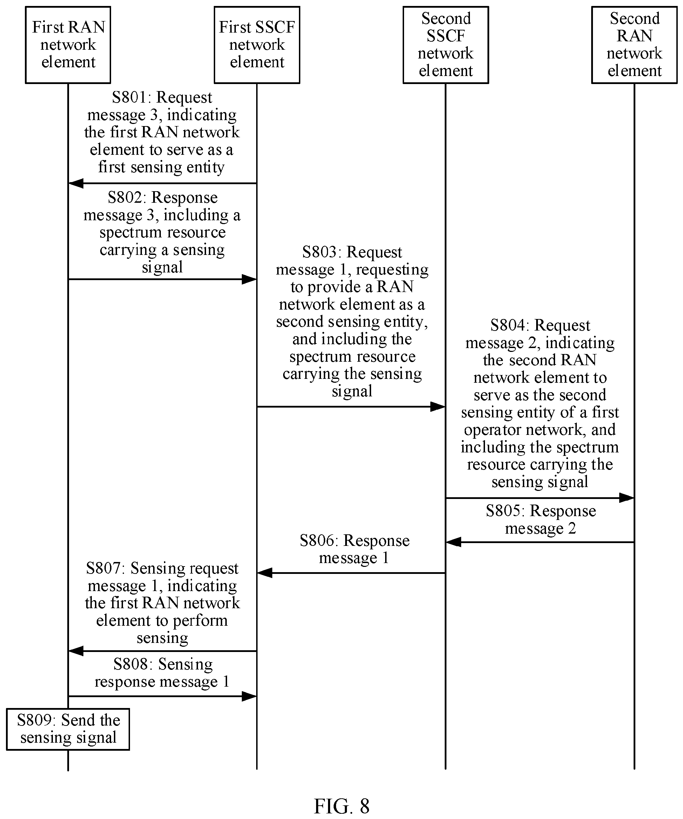

For example, based on the embodiment shown in FIG. 6, FIG. 8 is still another schematic flowchart of a communication method according to an embodiment of this application. As shown in FIG. 8, the communication method may include S801 to S809.

S801: A first SSCF network element sends a request message 3 to a first RAN network element, where the request message 3 indicates the first RAN network element to serve as a first sensing entity.

Correspondingly, the first RAN network element receives the request message 3.

S802: The first RAN network element sends a response message 3 to the first SSCF network element, where the response message 3 includes a spectrum resource carrying a sensing signal.

Correspondingly, the first SSCF network element receives the response message 3.

S803: The first SSCF network element sends a request message 1 to a second SSCF network element, where the request message 1 indicates to request a second operator network to provide a RAN network element as a second sensing entity for a first operator network, and the request message 1 includes the spectrum resource carrying the sensing signal.

Correspondingly, the second SSCF network element receives the request message 1.

S804: The second SSCF network element sends a request message 2 to a second RAN network element, where the request message 2 indicates the second RAN network element to serve as the second sensing entity of the first operator network, and the request message 2 includes the spectrum resource carrying the sensing signal.

Correspondingly, the second RAN network element receives the request message 2.

S805: The second RAN network element sends a response message 2 to the second SSCF function network element.

Correspondingly, the second SSCF network element receives the response message 2.

S806: The second SSCF network element sends a response message 1 to the first SSCF network element.

Correspondingly, the first SSCF network element receives the response message 1.

For S801 to S806, refer to S601 to S606. Details are not described again.

S807: The first SSCF network element sends a sensing request message 1 to the first RAN network element, where the sensing request message 1 indicates the first RAN network element to perform sensing.

For example, the sensing request message 1 indicates the first RAN network element to send the sensing signal.

For example, the sensing request message 1 may be an "Ns_Sensing_Start_Request" interface message.

Optionally, the sensing request message 1 may include a sensing service identifier. For the sensing service identifier, refer to the descriptions in the foregoing embodiments.

Correspondingly, the first RAN network element receives the sensing request message 1. After receiving the sensing request message 1, the first RAN network element may perform S808 and S809. S808 is optional.

S808: The first RAN network element sends a sensing response message 1 to the first SSCF network element.

Optionally, the sensing response message 1 indicates that performing sensing is acknowledged.

S809: The first RAN network element sends the sensing signal.

Correspondingly, the second RAN network element may receive the sensing signal, and obtain sensing data based on the received sensing signal. The sensing data obtained by the second RAN network element may be transmitted to a first SDPF network element, so that the first SDPF network element obtains the sensing data obtained by using the second RAN network element. The first SDPF network element belongs to the first operator network.

For another example, in the foregoing scenario in which the second sensing entity (the second RAN network element) serves as the sending sensing entity, the second sensing entity is configured to send the sensing signal, and the first sensing entity is configured to receive the sensing signal, the first SSCF network element may send a sensing request message 2 to the second SSCF network element, to request the second RAN network element to perform sensing. After receiving the sensing request message 2, the second SSCF network element may send a sensing request message 3 to the second RAN network element, to indicate the second RAN network element to perform sensing.

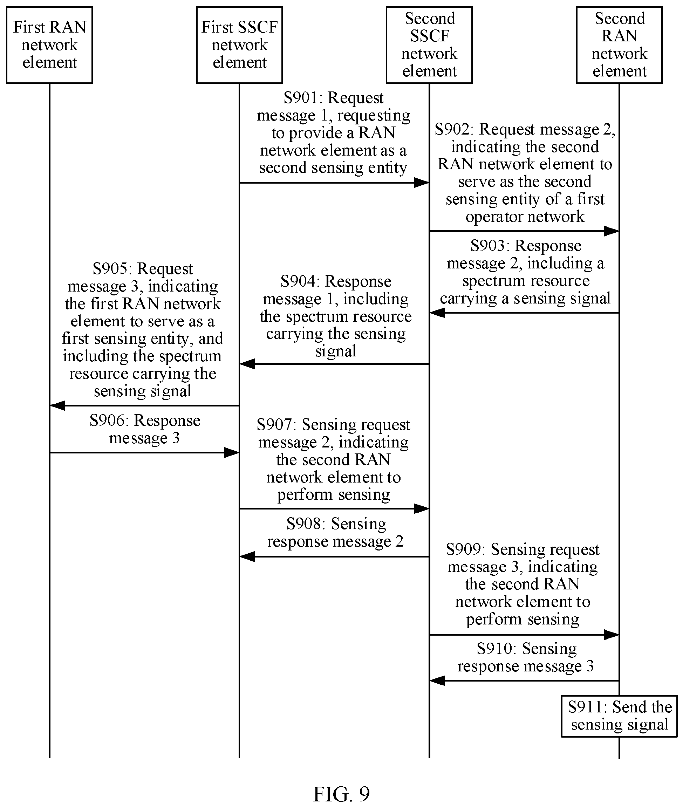

For example, based on the embodiment shown in FIG. 7, FIG. 9 is still another schematic flowchart of a communication method according to an embodiment of this application. As shown in FIG. 9, the communication method may include S901 to S911.

S901: A first SSCF network element sends a request message 1 to a second SSCF network element, where the request message 1 indicates to request a second operator network to provide a RAN network element as a second sensing entity for a first operator network.

Correspondingly, the second SSCF network element receives the request message 1.

S902: The second SSCF network element sends a request message 2 to a second RAN network element, where the request message 2 indicates the second RAN network element to serve as the second sensing entity of the first operator network.

Correspondingly, the second RAN network element receives the request message 2.

S903: The second RAN network element sends a response message 2 to the second SSCF function network element, where the response message 2 includes a spectrum resource carrying a sensing signal.

Correspondingly, the second SSCF network element receives the response message 2.

S904: The second SSCF network element sends a response message 1 to the first SSCF network element, where the response message 1 includes the spectrum resource carrying the sensing signal.

Correspondingly, the first SSCF network element receives the response message 1.

S905: The first SSCF network element sends a request message 3 to a first RAN network element, where the request message 3 indicates the first RAN network element to serve as a first sensing entity, and the request message 3 includes the spectrum resource carrying the sensing signal.

Correspondingly, the first RAN network element receives the request message 3.

S906: The first RAN network element sends a response message 3 to the first SSCF network element.

Correspondingly, the first SSCF network element receives the response message 3.

For S901 to S906, refer to S701 to S706. Details are not described again.

S907: The first SSCF network element sends a sensing request message 2 to the second SSCF network element, where the sensing request message 2 indicates the second RAN network element to perform sensing.

For example, the sensing request message 2 indicates to request the second RAN network element to send the sensing signal.

Optionally, the sensing request message 2 may include a sensing service identifier. For the sensing service identifier, refer to the descriptions in the foregoing embodiments.

Correspondingly, the second SSCF network element receives the sensing request message 2. After receiving the sensing request message 2, the second SSCF network element may perform S908 and S909. S908 is optional.

S908: The second SSCF network element sends a sensing response message 2 to the first SSCF network element.

Optionally, the sensing response message 2 indicates that performing sensing is acknowledged. S908 may alternatively be performed after S910, and an execution sequence is not limited herein.

S909: The second SSCF network element sends a sensing request message 3 to the second RAN network element, where the sensing request message 3 indicates the second RAN network element to perform sensing.

For example, the sensing request message 3 indicates the second RAN network element to send the sensing signal.

Optionally, the sensing request message 3 may include the sensing service identifier. For the sensing service identifier, refer to the descriptions in the foregoing embodiments.

Correspondingly, the second RAN network element receives the sensing request message 3. After receiving the sensing request message 3, the second RAN network element may perform S910 and S911. S910 is optional.

S910: The second RAN network element sends a sensing response message 3 to the second SSCF network element.

Optionally, the sensing response message 3 indicates that performing sensing is acknowledged.

S911: The second RAN network element sends the sensing signal.

Correspondingly, the first RAN network element may receive the sensing signal, and obtain sensing data based on the received sensing signal. The sensing data obtained by the first RAN network element may be transmitted to a first SDPF network element, so that the first SDPF network element obtains the sensing data obtained by using the second RAN network element.

Optionally, in the foregoing scenario in which the second sensing entity serves as the sending entity and the sensing entity to perform self-sending and self-receiving, and in the foregoing scenario in which some second sensing entities serve as the sending sensing entities and some second sensing entities serve as the receiving sensing entities, the first SSCF network element may also send a sensing request message 2 to the second SSCF network element in a manner similar to that described in FIG. 9, to request the second RAN network element to perform sensing. After receiving the sensing request message 2, the second SSCF network element may send a sensing request message 3 to the second RAN network element, to indicate the second RAN network element to perform sensing. A difference from the procedure shown in FIG. 9 lies in that, in this case, the second RAN network element receives a sensing signal (self-sending and self-receiving or self-sending and other-receiving), and obtains sensing data based on the sensing signal. The sensing data obtained by the second RAN network element may be transmitted to the first SDPF network element, so that the first SDPF network element obtains the sensing data obtained by using the second RAN network element.

As described above, according to the communication method provided in embodiments of this application, different operator networks can share a sensing entity to obtain sensing data. For example, according to the communication method, the first operator network can use the second RAN network element in the second operator network as the sensing entity, to obtain the sensing data.

Optionally, in embodiments of this application, in FIG. 4 to FIG. 9, the request message 3 sent by the first SSCF network element to the first RAN network element may be referred to as a fourth request message, and the response message 3 sent by the first RAN network element to the first SSCF network element may be referred to as a fourth response message. The request message 1 sent by the first SSCF network element to the second SSCF network element may be referred to as a fifth request message, and the response message 1 sent by the second SSCF network element to the first SSCF network element may be referred to as a fifth response message. The request message 2 sent by the second SSCF network element to the second RAN network element may be referred to as an eighth request message, and the response message 2 sent by the second RAN network element to the second SSCF network element may be referred to as an eighth response message. The sensing request message 1 sent by the first SSCF network element to the first RAN network element may be referred to as a first sensing request message, and the sensing response message 1 sent by the first RAN network element to the first SSCF network element may be referred to as a first sensing response message.

The sensing request message 2 sent by the first SSCF network element to the second SSCF network element may be referred to as a second sensing request message, and the sensing response message 2 sent by the second SSCF network element to the first SSCF network element may be referred to as a second sensing response message. The sensing request message 3 sent by the second SSCF network element to the second RAN network element may be referred to as a third sensing request message, and a sensing response message 3 sent by the second RAN network element to the second SSCF network element may be referred to as a third sensing response message.

It may be understood that, in embodiments of this application, the first SDPF network element in the first operator network may obtain sensing data, and the sensing data obtained by the first SDPF network element may include two types: One type is sensing data obtained by the first RAN network element (the first sensing entity) by receiving the sensing signal, and the other type is sensing data obtained by the second RAN network element (the second sensing entity) by receiving the sensing signal. After obtaining the sensing data, the first SDPF network element may process the sensing data, for example, perform fusion, or perform L2 sensing processing and/or L3 sensing processing.

In embodiments of this application, the sensing data obtained by the second RAN network element by receiving the sensing signal may be referred to as first sensing data, and the sensing data obtained by the first RAN network element by receiving the sensing signal may be referred to as second sensing data. The second sensing data may be obtained by the first RAN network element based on the sensing signal sent by the second RAN network element. For different implementation scenarios in which the second RAN network element receives the sensing signal, refer to the foregoing embodiments. Details are not described again.

Cross-network transmission does not need to be performed on the second sensing data. For example, the first RAN network element may obtain the second sensing data based on the received sensing signal, and send the second sensing data to the first SDPF network element. Correspondingly, the first SDPF network element may receive the second sensing data.

In a possible design, the second sensing data sent by the first RAN network element to the first SDPF network element may be original sensing data obtained by the first RAN network element through measurement based on the received sensing signal.

In another possible design, the second sensing data sent by the first RAN network element to the first SDPF network element may be sensing data processed by the first RAN network element. For example, the first RAN network element may also have a capability of processing original sensing data. After obtaining the original sensing data through measurement based on the received sensing signal, the first RAN network element may process the original sensing data, for example, perform L1 sensing processing and/or L2 sensing processing, to obtain processed sensing data.

Whether the second sensing data is original sensing data or processed sensing data is not limited in this application.

For the first sensing data, after obtaining the first sensing data, the second RAN network element needs to transmit the first sensing data to the first SDPF network element through cross-network transmission. Similar to the second sensing data, the first sensing data may alternatively be original sensing data obtained by the second RAN network element, or sensing data processed by the second RAN network element.

In a possible design, the second RAN network element may transmit the first sensing data to the first SDPF network element via a second SDPF network element, to implement cross-network transmission of the first sensing data. The second SDPF network element belongs to the second operator network. For example, the communication method may further include: The second RAN network element sends the first sensing data to the second SDPF network element. Correspondingly, the second SDPF network element receives the first sensing data. The second SDPF network element sends the first sensing data to the first SDPF network element. Correspondingly, the first SDPF network element receives the first sensing data.

Optionally, a first sensing bearer may be established between the first SDPF network element and the second SDPF network element, and the first sensing data may be transmitted through the first sensing bearer. Alternatively, the first SDPF network element may send the first sensing data to the second SDPF network element through the first sensing bearer.

The first sensing bearer may be understood as a sensing sharing data transmission channel, and is used by the second SDPF network element to send sensing data to the first SDPF network element. Establishment of the first sensing bearer may be initiated on a first operator network side, or may be initiated on a second operator network side. The first sensing bearer may be established in advance, or may be established when the first SSCF network element requests the second RAN network element to serve as a receiving sensing entity. For example, the first sensing bearer may be established in the procedure shown in FIG. 6 or FIG. 8. The following describes a process of establishing the first sensing bearer by using an example in which the second SSCF network element in the second operator network initiates establishment of the first sensing bearer.

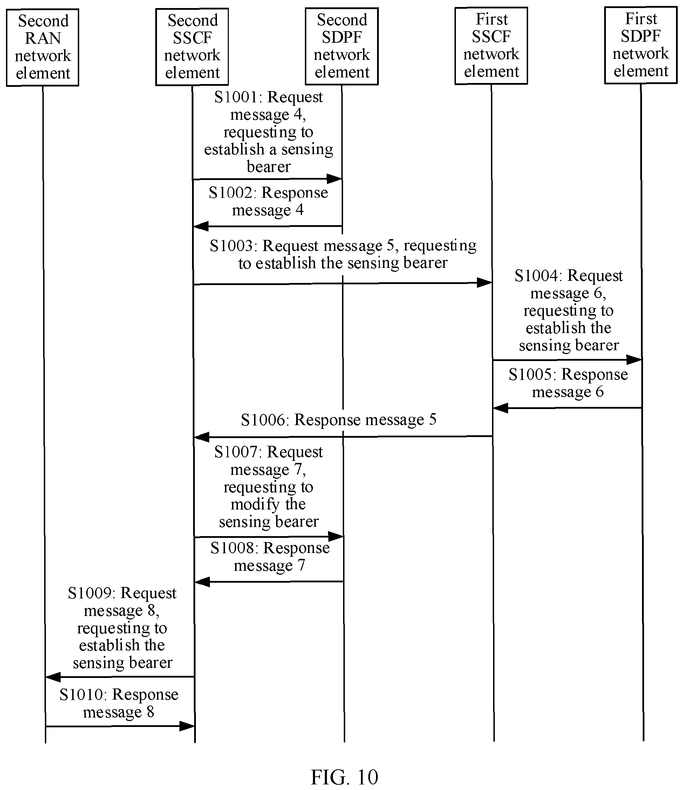

For example, FIG. 10 is a schematic flowchart of establishing a sensing bearer according to an embodiment of this application. As shown in FIG. 10, a procedure of establishing a first sensing bearer may include S1001 to S1010.

S1001: A second SSCF network element sends a request message 4 to a second SDPF network element, where the request message 4 indicates to request to establish a first sensing bearer.

Correspondingly, the second SDPF network element receives the request message 4.

For example, the request message 4 may be a "SensingBearer_Establishment_Request" interface message.

After receiving the request message 4, the second SDPF network element may perform S1002.

S1002: The second SDPF network element sends a response message 4 to the second SSCF network element, where the response message 4 indicates that establishment of the first sensing bearer is acknowledged.

Correspondingly, the second SSCF network element receives the response message 4.

For example, the response message 4 may be a "SensingBearer_Establishment_Response" interface message.

After receiving the response message 4 sent by the second SDPF network element, the second SSCF network element may perform S1003 to request a first operator network to establish the sensing bearer.

S1003: The second SSCF network element sends a request message 5 to a first SSCF network element, where the request message 5 indicates to request to establish the first sensing bearer.

Correspondingly, the first SSCF network element receives the request message 5.

Optionally, the request message 5 may carry an authentication identifier, communication information of the second SDPF network element, and the like. For example, the authentication identifier may be an FQDN of the second SDPF network element. The communication information of the second SDPF network element may be understood as an interface of the second SDPF network element, and may be used by another network element (for example, a first SDPF network element) to establish a data transmission channel, namely, the first sensing bearer, with the second SDPF network element.

For example, the request message 5 may be an "Nsscf_SensingBearer_Create_Request" interface message.

After receiving the request message 5, the first SSCF network element may perform S1004 to indicate the first SDPF network element to establish the first sensing bearer.

S1004: The first SSCF network element sends a request message 6 to the first SDPF network element, where the request message 6 indicates to request to establish the first sensing bearer.

Correspondingly, the first SDPF network element receives the request message 6.

Optionally, the request message 6 may carry content that is the same as that of the request message 5. For example, the request message 6 may also carry the authentication identifier, the communication information of the second SDPF network element, and the like. Details are not described again.

After receiving the request message 6, the first SDPF network element may establish the first sensing bearer with the second SDPF network element based on channel information of the second SDPF network element, to connect the first SDPF network element to the second SDPF network element.

For example, the request message 6 may be a "SensingBearer_Establishment_Request" interface message.

S1005: The first SDPF network element sends a response message 6 to the first SSCF network element, where the response message 6 indicates that establishment of the first sensing bearer is acknowledged.

Correspondingly, the first SSCF network element receives the response message 6.

For example, the response message 6 may be a "SensingBearer_Establishment_Response" interface message.

After receiving the response message 6, the first SSCF network element may perform S1006 to return, to the second SSCF network element, a response to establishing the sensing bearer.

S1006: The first SSCF network element sends a response message 5 to the second SSCF network element, where the response message 5 indicates that establishment of the first sensing bearer is acknowledged.

Correspondingly, the second SSCF network element receives the response message 5.

Optionally, the response message 5 may carry channel information of the first SDPF network element, which is used by the second SDPF network element to establish a data transmission channel, namely, the first sensing bearer, with the first SDPF network element.

For example, the response message 5 may be an "Nsscf_SensingBearer_Create_Response" interface message.

S1007: The second SSCF network element sends a request message 7 to the second SDPF network element, where the request message 7 indicates to request to modify the first sensing bearer.

Correspondingly, the second SDPF network element receives the request message 7.

Optionally, the request message 7 may carry communication information of the first SDPF network element.

After receiving the request message 7, the second SDPF network element may modify the first sensing bearer based on the channel information of the first SDPF network element, to connect the second SDPF network element to the first SDPF network element.

For example, the request message 7 may be a "SensingBearer_Modification_Request" interface message.

S1008: The second SDPF network element sends a response message 7 to the second SSCF network element, where the response message 7 indicates that modification of the first sensing bearer is acknowledged.

Correspondingly, the second SSCF network element receives the response message 7.

For example, the response message 7 may be a "SensingBearer_Modification_Response" interface message.

Optionally, the second SSCF network element may further perform the following S1009, to establish a sensing bearer between a second RAN network element and the second SDPF network element, where the sensing bearer may be considered as a part of the first sensing bearer. The second RAN network element may send first sensing data to the second SDPF network element through the sensing bearer, and the second SDPF network element may send the first sensing data to the first SDPF network element through the first sensing bearer.

S1009: The second SSCF network element sends a request message 8 to the second RAN network element, where the request message 8 indicates to request to establish the first sensing bearer.

Correspondingly, the second RAN network element receives the request message 8.

For example, the request message 8 may be an Ns-D interface message, for example, an "Ns-D_Bearer_Establishment_Request" interface message.

S1010: The second RAN network element sends a response message 8 to the second SSCF network element, where the response message 8 indicates that establishment of the first sensing bearer is acknowledged.

Correspondingly, the second SSCF network element receives the response message 8.

For example, the response message 8 may be an "Ns-D_Bearer_Establishment_Response" interface message.

The first sensing bearer may be established by performing the procedure shown in FIG. 10. Based on the first sensing bearer, the second RAN network element may send the first sensing data to the second SDPF network element. After receiving the first sensing data, the second SDPF network element may send the first sensing data to the first SDPF network element.

Optionally, the first sensing data may be original sensing data obtained by the second RAN network element, or sensing data processed by the second RAN network element, or sensing data processed by the second SDPF network element. This is not limited herein.

Optionally, the procedure shown in FIG. 10 may be performed after the second SSCF network element receives a response message 2 sent by the second RAN network element. For example, after receiving the response message 2 in S605 or S805, the second SSCF network element may perform S1001 to send the request message 4 to the second SDPF network element.

Optionally, in embodiments of this application, in the procedure shown in FIG. 10, the request message 4 sent by the second SSCF network element to the second SDPF network element may be referred to as a second request message, and the response message 4 sent by the second SDPF network element to the second SSCF network element may be referred to as a second response message. The request message 5 sent by the second SSCF network element to the first SSCF network element may be referred to as a sixth request message, and the response message 5 sent by the first SSCF network element to the second SSCF network element may be referred to as a sixth response message. The request message 6 sent by the first SSCF network element to the first SDPF network element may be referred to as a first request message, and the response message 6 sent by the first SDPF network element to the first SSCF network element may be referred to as a first response message. The request message 7 sent by the second SSCF network element to the second SDPF network element may be referred to as a third request message, and the response message 7 sent by the second SDPF network element to the second SSCF network element may be referred to as a third response message. The request message 8 sent by the second SSCF network element to the second RAN network element may be referred to as a tenth request message, and the response message 8 sent by the second RAN network element to the second SSCF network element may be referred to as a tenth response message.

In another possible design, the second RAN network element sends the first sensing data to a second UPF network element in the second operator network, the second UPF network element may send the first sensing data to a first UPF network element in the first operator network, and the first UPF network element may send the first sensing data to the first SDPF network element, to implement cross-network transmission of the first sensing data.

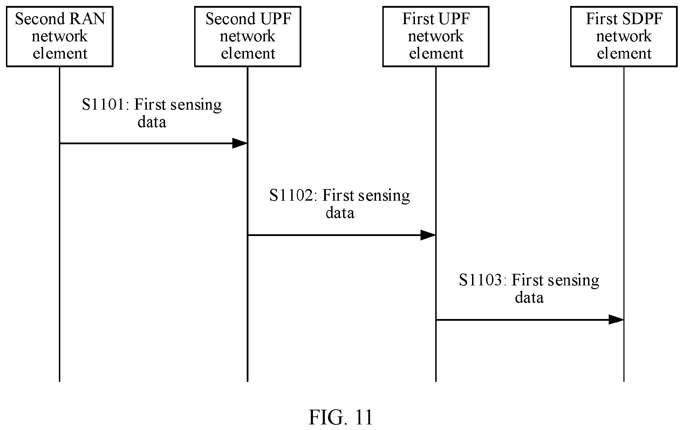

For example, FIG. 11 is a schematic flowchart of transmitting first sensing data according to an embodiment of this application. As shown in FIG. 11, a procedure of transmitting the first sensing data based on UPF network elements may include S1101 to S1103.

S1101: A second RAN network element sends the first sensing data to a second UPF network element.

Correspondingly, the second UPF network element receives the first sensing data.

S1102: The second UPF network element sends the first sensing data to a first UPF network element.

Correspondingly, the first UPF network element receives the first sensing data.

S1103: The first UPF network element sends the first sensing data to a first SDPF network element.

Correspondingly, the first SDPF network element receives the first sensing data.

Optionally, a cross-operator/cross-network data transmission channel needs to be first established between the first UPF network element and the second UPF network element. The first sensing data may be transmitted across networks based on the data channel between the first UPF network element and the second UPF network element.

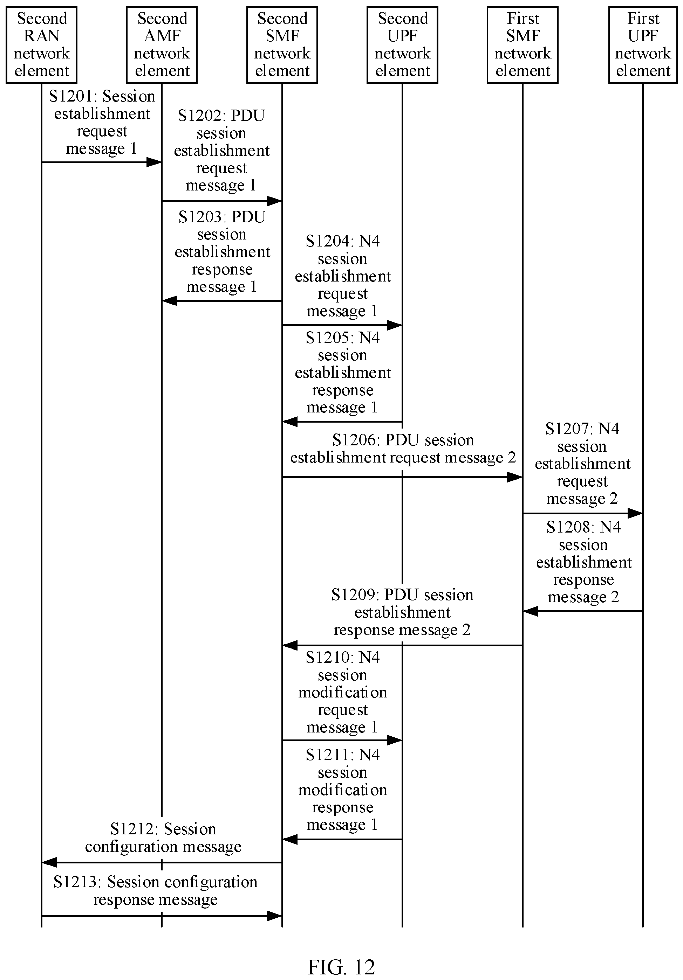

For example, FIG. 12 is a schematic flowchart of establishing a cross-network data transmission channel using UPF network elements according to an embodiment of this application. As shown in FIG. 12, a procedure of establishing the cross-network data transmission channel using UPF network elements may include S1201 to S1213.

S1201: A second RAN network element sends a session establishment request message 1 to a second AMF network element, where the session establishment request message 1 indicates to request to establish a cross-network data transmission channel with a second operator network.

Correspondingly, the second AMF network element receives the session establishment request message 1. The second AMF network element belongs to the second operator network.

For example, the session establishment request message 1 may include sensing-related identification information, cross-operator network identification information, identification information of the second RAN network element, and the like. The sensing-related identification information indicates that sensing data needs to be transmitted through the cross-network data transmission channel. The cross-operator network identification information indicates that the cross-network data transmission channel needs to be established, for example, may be a PLMN identifier of the second operator network.

S1202: The second AMF network element sends a protocol data unit (protocol data unit, PDU) session establishment request message 1 to a second SMF network element, where the PDU session establishment request message 1 indicates to request to establish the cross-network data transmission channel with the second operator network.

For example, the PDU session establishment request message 1 may carry an FQDN of a first SMF network element. The PDU session establishment request message 1 may be an "Nsmf_PDUSession_CreateSMContext_Request" interface message. The second SMF network element belongs to the second operator network.

Correspondingly, the second SMF network element receives the PDU session establishment request message 1.

S1203: The second SMF network element sends a PDU session establishment response message 1 to the second AMF network element.

Optionally, the PDU session establishment response message 1 indicates that the PDU session establishment request message 1 is acknowledged to be received.

For example, the PDU session establishment response message 1 may be an "Nsmf_PDUSession_CreateSMContext_Response" interface message.

Correspondingly, the second AMF network element receives the PDU session establishment response message 1.

S1204: The second SMF network element sends an N4 session establishment request message 1 to a second UPF network element, where the N4 session establishment request message 1 indicates to request to establish the cross-network data transmission channel with the second operator network.

For example, the N4 session establishment request message 1 may be an "N4 Session Establishment Request" interface message.

Correspondingly, the second UPF network element receives the N4 session establishment request message 1.

S1205: The second UPF network element sends an N4 session establishment response message 1 to the second SMF network element, where the N4 session establishment response message 1 indicates that establishment of the cross-network data transmission channel with the second operator network is acknowledged.

For example, the N4 session establishment response message 1 may be an "N4 Session Establishment Response" interface message.

Correspondingly, the second SMF network element receives the N4 session establishment response message 1.

S1206: The second SMF network element sends a PDU session establishment request message 2 to the first SMF network element, where the PDU session establishment request message 2 indicates to request to establish the cross-network data transmission channel with the second operator network.

For example, the PDU session establishment request message 2 may be an "Nsmf_PDUSession_Create_Request" interface message. The first SMF network element belongs to a first operator network.

Correspondingly, the first SMF network element receives the PDU session establishment request message 2.

S1207: The first SMF network element sends an N4 session establishment request message 2 to a first UPF network element, where the N4 session establishment request message 2 indicates to request to establish a cross-network data transmission channel with the first operator network.

For example, the N4 session establishment request message 2 may be an "N4 Session Establishment Request" interface message.

Correspondingly, the first UPF network element receives the N4 session establishment request message 2.

S1208: The first UPF network element sends an N4 session establishment response message 2 to the first SMF network element, where the N4 session establishment response message 2 indicates that establishment of the cross-network data transmission channel with the first operator network is acknowledged.

For example, the N4 session establishment response message 2 may be an "N4 Session Establishment Response" interface message.

Correspondingly, the first SMF network element receives the N4 session establishment response message 2.

Optionally, the PDU session establishment request message 2 and the N4 session establishment request message 2 carry channel information of the second UPF network element, which is used to connect the first UPF network element to the second UPF network element.

S1209: The first SMF network element sends a PDU session establishment response message 2 to the second SMF network element, where the PDU session establishment response message 2 indicates that establishment of the cross-network data transmission channel with the second operator network is acknowledged.

For example, the PDU session establishment response message 2 may be an "Nsmf_PDUSession_Create_Response" interface message.

Correspondingly, the second SMF network element receives the PDU session establishment response message 2.

S1210: The second SMF network element sends an N4 session modification request message 1 to the second UPF network element, where the N4 session modification request message 1 indicates to request to modify the cross-network data transmission channel with the second operator network.

For example, the N4 session modification request message 1 may be an "N4 Session Modification Request" interface message.

Correspondingly, the second UPF network element receives the N4 session modification request message 1.

S1211: The second UPF network element sends an N4 session modification response message 1 to the second SMF network element, where the N4 session modification response message 1 indicates that the modification of the cross-network data transmission channel with the second operator network is acknowledged.

For example, the N4 session modification response message 1 may be an "N4 Session Modification Response" interface message.

Correspondingly, the second SMF network element receives the N4 session modification response message 1.

Optionally, the PDU session establishment response message 2 and the N4 session modification request message 1 carry channel information of a first UPF network element, which is used to connect the second UPF network element to the first UPF network element. In this way, the cross-network data transmission channel is established between the first UPF network element and the second UPF network element.

S1212: The second SMF network element sends a session configuration message to the second RAN network element, where the session configuration message indicates the cross-network data transmission channel.

For example, the session configuration message may include session configuration information related to the cross-network data transmission channel.

Correspondingly, the second RAN network element receives the session configuration message.

S1213: The second RAN network element sends a session configuration response message to the second SMF network element, where the session configuration response message indicates that reception of the session configuration message is acknowledged.

Correspondingly, the second SMF network element receives the session configuration response message.

According to the procedure shown in FIG. 12, the cross-network data transmission channel may be established. The second RAN network element may send first sensing data to the second UPF network element in the second operator network, the second UPF network element may send the first sensing data to the first UPF network element in the first operator network, and the first UPF network element may send the first sensing data to the first SDPF network element, to implement cross-network transmission of the first sensing data.

In some possible implementations, in the foregoing embodiment in which the first sensing data is transmitted across networks via the first UPF network element and the second UPF network element, a message carrying the first sensing data indicates or carries first indication information, where the first indication information indicates that the sensing data needs to be transmitted to the first SDPF network element. For example, a data packet of the first sensing data may indicate or carry the first indication information. After receiving the first sensing data, the first UPF network element may determine, based on the first indication information, that the first sensing data needs to be transmitted to the first SDPF network element.

Optionally, the first indication information may be an agreed IP address, for example, a fixed or special IP address. Before sending the first sensing data, the second RAN network element may encapsulate the first sensing data. During encapsulation, the agreed IP address may be used as a destination address. After an encapsulation packet of the first sensing data is transmitted to the first UPF network element by performing the procedure shown in FIG. 11, the first UPF network element may parse the encapsulation packet of the first sensing data to obtain the agreed IP address. The agreed IP address may indicate the first UPF network element to send the first sensing data to the first SDPF network element.

The agreed IP address can reduce security exposure of the first SDPF network element and improve security.

Optionally, the first indication information (for example, the agreed IP address) may be agreed upon by a first SSCF network element and a second SSCF network element. For example, the first indication information may be included in the request message 1 sent by the first SSCF network element to the second SSCF network element in the foregoing embodiment, and then transmitted to the second SMF through an SBI. The second SMF may send the first indication information to the second UPF network element through the N4 session establishment request message 1 shown in FIG. 12. The first SMF may send the first indication information to the first UPF network element through the N4 session establishment request message 2 shown in FIG. 12. The first indication information may be included in the request message 2 sent by the second SSCF network element to the second RAN network element in the foregoing embodiment, to be sent to the second RAN network element.

Alternatively, the first indication information (for example, the agreed IP address) may be agreed upon when a session is established. For example, the second RAN network element may include the first indication information in the session establishment request sent to the second AMF network element. Then, the second AMF network element sends the first indication information to the second SMF network element, and the second SMF network element sends the first indication information to the first SMF network element. The second SMF network element and the first SMF network element may respectively send the first indication information to the second UPF network element and the first UPF network element through the N4 session establishment request message 1 and the N4 session establishment request message 2.

Optionally, the first indication information may alternatively be another field, or in some other possible implementations, the first UPF may be indicated, in another manner, that the first sensing data needs to be transmitted to the first SDPF network element. This is not limited in this application.

Optionally, the second RAN network element may alternatively send the first sensing data to a second SDPF network element, and the second SDPF network element sends the first sensing data to the second UPF network element, to transmit the first sensing data to the first SDPF network element via the second UPF network element and the first UPF network element. An implementation procedure thereof is similar to that shown in FIG. 11 and FIG. 12, and details are not described again.

It should be understood that, in this embodiment of this application, the first SSCF network element needs to first obtain information related to the second SSCF network element, for example, an FQDN, and then may send the request message 1 to the second SSCF network element, to request the second operator network to provide the RAN network element as the second sensing entity for the first operator network.

In a possible design, the first SSCF network element may send a cross-domain sensing assistance request to the first NRF network element, to request to obtain fully qualified domain name information (for example, an FQDN) of the SSCF network element in the second operator network. The first NRF network element may send a cross-domain sensing assistance request to the second NRF network element. After receiving the cross-domain sensing assistance request, the second NRF network element may return the fully qualified domain name information of the second SSCF network element to the first NRF network element. The first NRF network element may send the fully qualified domain name information of the second SSCF network element to the first SSCF network element. The first NRF network element belongs to the first operator network, and the second NRF network element belongs to the second operator network.

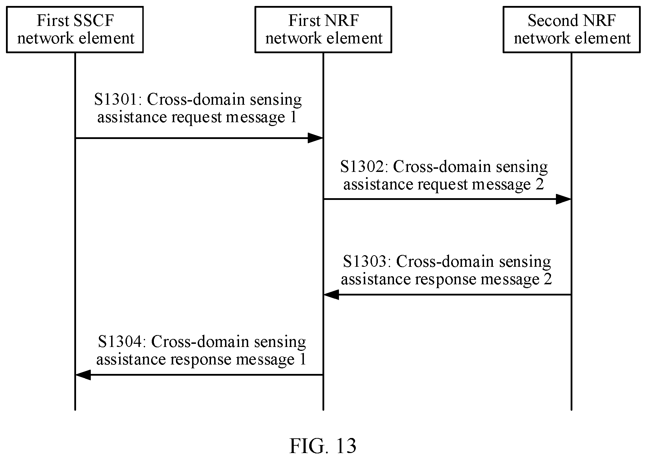

For example, FIG. 13 is still another schematic flowchart of a communication method according to an embodiment of this application. As shown in FIG. 13, the communication method may include S1301 to S1304.

S1301: A first SSCF network element sends a cross-domain sensing assistance request message 1 to a first NRF network element, where the cross-domain sensing assistance request message 1 indicates to request to obtain fully qualified domain name information of a second SSCF network element.

Correspondingly, the first NRF network element receives the cross-domain sensing assistance request message 1.

For example, the cross-domain sensing assistance request message 1 may be an "Nnrf_NFDiscovery_Request" interface message.

S1302: The first NRF network element sends a cross-domain sensing assistance request message 2 to a second NRF network element, where the cross-domain sensing assistance request message 2 indicates to request to obtain the fully qualified domain name information of the second SSCF network element.

Correspondingly, the second NRF network element receives the cross-domain sensing assistance request message 2.

S1303: The second NRF network element sends a cross-domain sensing assistance response message 2 to the first NRF network element, where the cross-domain sensing assistance response message 2 indicates the fully qualified domain name information of the second SSCF network element.

For example, the cross-domain sensing assistance response message 2 carries or includes the fully qualified domain name information of the second SSCF network element.

Correspondingly, the first NRF network element receives the cross-domain sensing assistance response message 2.

S1304: The first NRF network element sends a cross-domain sensing assistance response message 1 to the first SSCF network element, where the cross-domain sensing assistance response message 1 indicates the fully qualified domain name information of the second SSCF network element.

For example, the cross-domain sensing assistance response message 1 carries or includes the fully qualified domain name information of the second SSCF network element.

Correspondingly, the first SSCF network element receives the cross-domain sensing assistance response message 1.

For example, the cross-domain sensing assistance response message 1 may be an "Nnrf_NFDiscovery_Response" interface message.

According to the procedure shown in FIG. 13, the first SSCF network element may obtain the fully qualified domain name information of the second SSCF network element.

The cross-domain sensing assistance request message 1 may be referred to as a seventh request message, and the cross-domain sensing assistance response message 1 may be referred to as a seventh response message. The cross-domain sensing assistance request message 2 may be referred to as a ninth request message, and the cross-domain sensing assistance response message 2 may be referred to as a ninth response message.

Similarly, the second AMF network element in the foregoing embodiment may also obtain an FQDN of a first SMF network element in a manner similar to that in FIG. 13. Details are not described again.

Optionally, in embodiments of this application, in cross-network communication between different operator networks, cross-network transmission of signaling needs to be performed via an SEPP. For the SEPP, refer to the descriptions in the foregoing embodiments. For example, each piece of signaling transmitted across networks between the first operator network and the second operator network shown in FIG. 4 to FIG. 10, FIG. 12, and FIG. 13 may be forwarded via SEPPs of the first operator network and the second operator network.

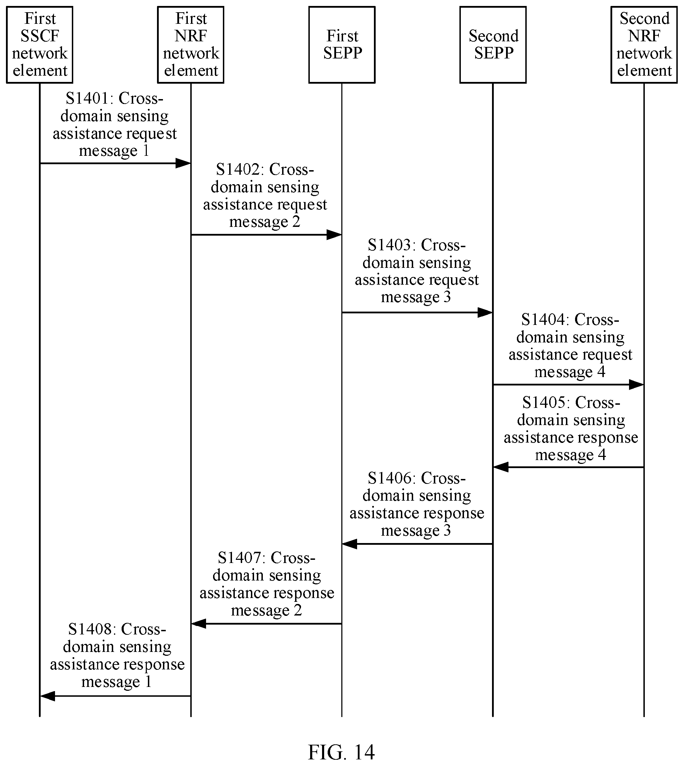

For example, using a process in which the first SSCF network element obtains the fully qualified domain name information of the second SSCF network element shown in FIG. 13 as an example, FIG. 14 is still another schematic flowchart of a communication method according to an embodiment of this application. As shown in FIG. 14, the communication method may include S1401 to S1408.

S1401: A first SSCF network element sends a cross-domain sensing assistance request message 1 to a first NRF network element, where the cross-domain sensing assistance request message 1 indicates to request to obtain fully qualified domain name information of a second SSCF network element.

Correspondingly, the first NRF network element receives the cross-domain sensing assistance request message 1.

S1402: The first NRF network element sends a cross-domain sensing assistance request message 2 to a first SEPP, where the cross-domain sensing assistance request message 2 indicates to request to obtain the fully qualified domain name information of the second SSCF network element.

Correspondingly, the first SEPP receives the cross-domain sensing assistance request message 2. The first SEPP belongs to a first operator network.

S1403: The first SEPP sends a cross-domain sensing assistance request message 3 to a second SEPP, where the cross-domain sensing assistance request message 3 indicates to request to obtain the fully qualified domain name information of the second SSCF network element.

For example, information carried in the cross-domain sensing assistance request message 3 includes information carried in the cross-domain sensing assistance request message 2. For example, the cross-domain sensing assistance request message 1, the cross-domain sensing assistance request message 2, and the cross-domain sensing assistance request message 3 may all carry a target operator network list (target-plmn-list) and sensing area information.

Correspondingly, the second SEPP receives the cross-domain sensing assistance request message 3.

The second SEPP may determine a second NRF network element based on the sensing area information.

S1404: The second SEPP sends a cross-domain sensing assistance request message 4 to the second NRF network element, where the cross-domain sensing assistance request message 4 indicates to request to obtain the fully qualified domain name information of the second SSCF network element.

Correspondingly, the second NRF network element receives the cross-domain sensing assistance request message 4.

S1405: The second NRF network element sends a cross-domain sensing assistance response message 4 to the second SEPP, where the cross-domain sensing assistance response message 4 indicates the fully qualified domain name information of the second SSCF network element.

Correspondingly, the second SEPP receives the cross-domain sensing assistance response message 4.

S1406: The second SEPP sends a cross-domain sensing assistance response message 3 to the first SEPP, where the cross-domain sensing assistance response message 3 indicates to request to obtain the fully qualified domain name information of the second SSCF network element.

Correspondingly, the first SEPP receives the cross-domain sensing assistance response message 3.

S1407: The first SEPP sends a cross-domain sensing assistance response message 2 to the first NRF network element, where the cross-domain sensing assistance response message 2 indicates the fully qualified domain name information of the second SSCF network element.

Correspondingly, the first NRF network element receives the cross-domain sensing assistance response message 2.

S1408: The first NRF network element sends a cross-domain sensing assistance response message 1 to the first SSCF network element, where the cross-domain sensing assistance response message 1 indicates the fully qualified domain name information of the second SSCF network element.

Correspondingly, the first SSCF network element receives the cross-domain sensing assistance response message 1.

Optionally, in this embodiment of this application, the first SSCF network element may send the foregoing fifth request message or seventh request message to the second SSCF network element when available sensing entity resources in the first operator network are insufficient.

For example, if the first SSCF network element selects a sensing entity in an area 1 based on a sensing service to perform sensing, for example, environment sensing, but finds that there is no sensing entity or sensing entities are insufficient (for example, a sensing entity in the network of the first SSCF network element may be faulty), the first SSCF network element may send a request message to the second SSCF network element, to request the second operator network to provide a second RAN network element as a sensing entity, to help obtain sensing data.

Optionally, in this embodiment of this application, when a RAN network element in an operator network sends sensing data to an SDPF network element, for example, a first RAN network element sends second sensing data to a first SDPF network element, or the second RAN network element sends first sensing data to a second SDPF network element, the RAN network element may publish the sensing data to a data communication agent (data communication proxy, DCP) network element, and the SDPF network element may subscribe to and obtain the sensing data from the DCP network element.

The DCP is merely an example of a name, and the DCP may be replaced with another name. A device having a same function as the DCP may be considered as a DCP. This is not limited in this application.

The DCP may be deployed in a 3GPP network as an independent network element, or may be co-located with a network element or a device in the 3GPP network. Optionally, the DCP may be deployed in an access network, or may be deployed in a core network. Implementation of the DCP network element is not limited in this application.

The RAN network element may serve as a data producer (data producer) to send sensing data to the DCP, for example, publish the sensing data on the DCP network element in a topic publish (topic publish) manner. The SDPF network element may serve as a data consumer (data consumer) to perform data subscription and data extraction (data pull) on the DCP network element, for example, may obtain the sensing data in a topic subscribe (topic subscribe) manner.

Optionally, in the foregoing embodiments, when any two network elements (a network element 1 and a network element 2 are used as an example) interact with each other, after the network element 1 sends a request message or a control message to the network element 2, the network element 2 may return a response message to the network element 1. The response message may carry other information, or may not carry information, and may be used to only acknowledge reception. Such response message is not described in detail in this application.

Optionally, names of the messages mentioned in embodiments of this application, for example, the first request message, the second request message, the first response message, and the second response message, may be described in other ways, and the messages may be implemented through a same interface or different interfaces. For example, when the messages are implemented, an existing interface between interacting network elements may be used or a new interface may be defined. Names and implementations of the messages are not limited in this application.

Based on the foregoing embodiments, embodiments of this application actually provide methods that can be applied to different network element sides, for example, the first SDPF network element, the second SDPF network element, the first SSCF network element, the second SSCF network element, the first UPF network element, and the second UPF network element. For a method corresponding to each network element side, refer to the steps performed by each network element in the foregoing embodiments.

It should be noted that, for brief description, the foregoing method embodiments are represented as a series of actions. However, a person skilled in the art should appreciate that this application is not limited to the described order of the actions because some steps may be performed in other orders or simultaneously according to this application. It should be further appreciated by a person skilled in the art that embodiments described in this specification all belong to example embodiments, and the involved actions and modules are not necessary for by this application.

The foregoing mainly describes the solutions provided in embodiments of this application from a perspective of interaction between the network elements. It may be understood that, to implement the foregoing functions, the network elements, for example, the first SDPF network element, the second SDPF network element, the first SSCF network element, the second SSCF network element, the first UPF network element, and the second UPF network element, include corresponding hardware structures and/or software modules for performing the functions.

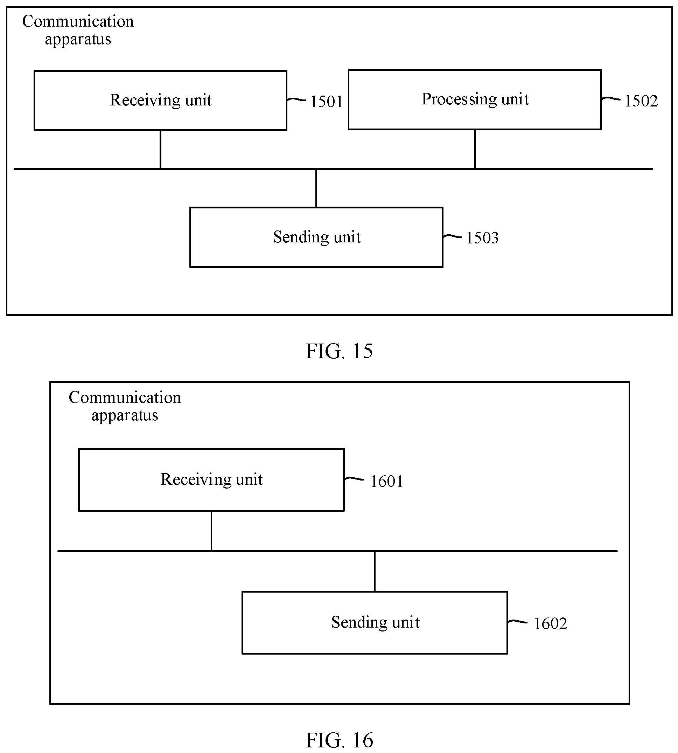

For example, an embodiment of this application may provide a communication apparatus configured to implement a function of the foregoing first SDPF network element. The communication apparatus may be a communication device that is deployed with or carries the first SDPF network element, or may be an apparatus (for example, a chip or a software module) in the communication device that is deployed with or carries the first SDPF network element. FIG. 15 is a diagram of a structure of a communication apparatus according to an embodiment of this application. As shown in FIG. 15, the communication apparatus may include a receiving unit 1501, a processing unit 1502, and a sending unit 1503.

The receiving unit 1501 is configured to obtain sensing data, where the sensing data includes first sensing data and/or second sensing data, where the first sensing data is obtained based on a sensing signal received by a second access network element; and the second sensing data is from a first access network element, and the second sensing data is obtained based on a sensing signal sent by the second access network element.

The processing unit 1502 is configured to process the sensing data.

The first access network element and a first sensing data processing function network element belong to a first operator network, and the second access network element belongs to a second operator network.

In a possible design, the receiving unit 1501 is specifically configured to receive the first sensing data sent by a second sensing data processing function network element, where the first sensing data is transmitted through a first sensing bearer between the first sensing data processing function network element and the second sensing data processing function network element. The second sensing data processing function network element belongs to the second operator network.

In a possible design, the receiving unit 1501 is further configured to receive a first request message from a first sensing service control function network element, where the first request message indicates to request to establish the first sensing bearer; and the sending unit 1503 is configured to send a first response message to the first sensing service control function network element, where the first response message indicates that establishment of the first sensing bearer is acknowledged; and the first sensing service control function network element belongs to the first operator network.

In a possible design, the receiving unit 1501 is specifically configured to receive the first sensing data sent by a first user plane function network element, where the first sensing data is sent by a second user plane function network element to the first user plane function network element, the first user plane function network element belongs to the first operator network, and the second user plane function network element belongs to the second operator network.

In a possible design, the receiving unit 1501 is specifically configured to receive the second sensing data from the first access network element.

For another example, an embodiment of this application may provide a communication apparatus configured to implement a function of the foregoing second SDPF network element. The communication apparatus may be a communication device that is deployed with or carries the second SDPF network element, or may be an apparatus (for example, a chip or a software module) in the communication device that is deployed with or carries the second SDPF network element. FIG. 16 is a diagram of another structure of a communication apparatus according to an embodiment of this application. As shown in FIG. 16, the communication apparatus may include a receiving unit 1601 and a sending unit 1602.

The receiving unit 1601 is configured to receive first sensing data from a second access network element, where the first sensing data is obtained by the second access network element based on a received sensing signal.

The sending unit 1602 is configured to send the first sensing data to a first sensing data processing function network element.

The first sensing data processing function network element belongs to a first operator network, and the second access network element and a second sensing data processing function network element belong to a second operator network.

In a possible design, the first sensing data is transmitted through a first sensing bearer between the first sensing data processing function network element and the second sensing data processing function network element.

In a possible design, the receiving unit 1601 is further configured to receive a second request message from a second sensing service control function network element, where the second request message indicates to request to establish the first sensing bearer. The sending unit 1602 is further configured to send a second response message to the second sensing service control function network element, where the second response message indicates that establishment of the first sensing bearer is acknowledged.

The receiving unit 1601 is further configured to receive a third request message from the second sensing service control function network element, where the third request message indicates to request to modify the first sensing bearer. The sending unit 1602 is further configured to send a third response message to the second sensing service control function network element, where the third response message indicates that modification of the first sensing bearer is acknowledged.

The second sensing service control function network element belongs to the second operator network.

In a possible design, the sending unit 1602 is specifically configured to send the first sensing data to a second user function network element, to send the first sensing data to the first sensing data processing function network element via the second user plane function network element and a first user plane function network element.

The first user plane function network element belongs to the first operator network, and the second user plane function network element belongs to the second operator network.

For an implementation of a communication apparatus corresponding to another network element described below, refer to FIG. 16, and the implementation is not shown in the accompanying drawings.

For still another example, an embodiment of this application may provide a communication apparatus configured to implement a function of the foregoing first SSCF network element. The communication apparatus may be a communication device that is deployed with or carries the first SSCF network element, or may be an apparatus (for example, a chip or a software module) in the communication device that is deployed with or carries the first SSCF network element. The communication apparatus may include a sending unit and a receiving unit.

The sending unit is configured to send a fourth request message to a first access network element, where the fourth request message indicates the first access network element to serve as a first sensing entity; and the receiving unit is configured to receive a fourth response message from the first access network element, where the fourth response message indicates that the first access network element is acknowledged as the first sensing entity.

The sending unit is further configured to send a fifth request message to a second sensing service control function network element, where the fifth request message indicates to request a second operator network to provide an access network element as a second sensing entity for a first operator network; and the receiving unit 1702 is further configured to receive a fifth response message from the second sensing service control function network element, where the fifth response message indicates that a second access network element is provided as the second sensing entity of the first operator network.

The first sensing entity and the second sensing entity are configured to obtain sensing data, the first access network element and the first sensing service control function network element belong to the first operator network, and the second access network element and the second sensing service control function network element belong to the second operator network.

In a possible design, the second sensing entity is configured to receive a sensing signal; the receiving unit is further configured to receive a sixth request message from the second sensing service control function network element, where the sixth request message indicates to request to establish a first sensing bearer between a first sensing data processing function network element and a second sensing data processing function network element; and the sending unit is further configured to send a first request message to the first sensing data processing function network element, where the first request message indicates to request to establish the first sensing bearer.

The receiving unit is further configured to receive a first response message from the first sensing data processing function network element, where the first response message indicates that establishment of the first sensing bearer is acknowledged; and the sending unit is further configured to send a sixth response message to the second sensing service control function network element, where the sixth response message indicates that establishment of the first sensing bearer is acknowledged.

The first sensing bearer is used by the second sensing data processing function network element to send the sensing data to the first sensing data processing function network element, the second sensing data processing function network element belongs to the second operator network, and the first sensing data processing function network element belongs to the first operator network.

In a possible design, the first sensing entity is configured to send the sensing signal, the second sensing entity is configured to receive the sensing signal, and the sending unit is further configured to send a first sensing request message to the first access network element, where the first sensing request message indicates the first access network element to perform sensing.

In a possible design, the second sensing entity is configured to send the sensing signal, and the sending unit is further configured to send a second sensing request message to the second sensing service control function network element, where the second sensing request message indicates the second access network element to perform sensing.

In a possible design, the sending unit is further configured to send a seventh request message to a first network repository function network element, where the seventh request message indicates to request to obtain fully qualified domain name information of the second sensing service control function network element; and the receiving unit is further configured to receive a seventh response message from the first network repository function network element, where the seventh response message indicates the fully qualified domain name information of the second sensing service control function network element.

The first network repository function network element belongs to the first operator network.

In a possible design, the first sensing entity is configured to send the sensing signal, the second sensing entity is configured to receive the sensing signal, and the fourth response message and the fifth request message include a spectrum resource carrying the sensing signal.

In a possible design, the second sensing entity is configured to send the sensing signal, the first sensing entity is configured to receive the sensing signal, and the fourth request message and the fifth response message include a spectrum resource carrying the sensing signal.

In a possible design, the fifth request message includes at least one of the following information: a sensing service identifier, a sensing area, sensing data requirement information, and sensing entity requirement information; the sensing service identifier indicates a sensing service; the sensing area indicates a sensing range of the second sensing entity; the sensing data requirement information indicates a sensing data requirement of the sensing service; and the sensing entity requirement information indicates a sensing entity type of the second sensing entity, where the sensing entity type includes a sending sensing entity and/or a receiving sensing entity.

In a possible design, the sending unit is specifically configured to: when available sensing entity resources in the first operator network are insufficient, send the fifth request message to the second sensing service control function network element.

For still another example, an embodiment of this application may provide a communication apparatus configured to implement a function of the foregoing second SSCF network element. The communication apparatus may be a communication device that is deployed with or carries the second SSCF network element, or may be an apparatus (for example, a chip or a software module) in the communication device that is deployed with or carries the second SSCF network element. The communication apparatus may include a receiving unit and a sending unit.

The receiving unit is configured to receive a fifth request message from a first sensing service control function network element, where the fifth request message indicates to request a second operator network to provide an access network element as a second sensing entity for a first operator network; and the sending unit is configured to send an eighth request message to a second access network element, where the eighth request message indicates the second access network element to serve as the second sensing entity of the first operator network.

The receiving unit is further configured to receive an eighth response message from the second access network element, where the eighth response message indicates that the second access network element is acknowledged as the second sensing entity of the first operator network; and the sending unit 1802 is further configured to send a fifth response message to the first sensing service control function network element, where the fifth response message indicates that the second access network element is provided as the second sensing entity of the first operator network.

The second sensing entity is configured to obtain sensing data, the first sensing service control function network element belongs to the first operator network, and the second access network element and the second sensing service control function network element belong to the second operator network.

In a possible design, the sending unit is further configured to send a sixth request message to the first sensing service control function network element, where the sixth request message indicates to request to establish a first sensing bearer between a first sensing data processing function network element and a second sensing data processing function network element; and the receiving unit is further configured to receive a sixth response message from the first sensing service control function network element, where the sixth response message indicates that establishment of the first sensing bearer is acknowledged.

The first sensing bearer is used by the second sensing data processing function network element to send the sensing data to the first sensing data processing function network element, the second sensing data processing function network element belongs to the second operator network, and the first sensing data processing function network element belongs to the first operator network.

In a possible design, the sending unit is further configured to send a second request message to the second sensing data processing function network element, where the second request message indicates to request to establish the first sensing bearer; and the receiving unit 1801 is further configured to receive a second response message from the second sensing data processing function network element, where the second response message indicates that establishment of the first sensing bearer is acknowledged.

The sending unit is further configured to send a third request message to the second sensing data processing function network element, where the third request message indicates to request to modify the first sensing bearer; and the receiving unit is further configured to receive a third response message from the second sensing data processing function network element, where the third response message indicates that modification of the first sensing bearer is acknowledged.

In a possible design, the second sensing entity is configured to send a sensing signal, and the receiving unit is further configured to receive a second sensing request message from the first sensing service control function network element, where the second sensing request message indicates the second access network element to perform sensing; and the sending unit is further configured to send a third sensing request message to the second access network element, where the third sensing request message indicates the second access network element to perform sensing.

In a possible design, the second sensing entity is configured to receive the sensing signal, and the fifth request message and the eighth request message include a spectrum resource carrying the sensing signal.

In a possible design, the second sensing entity is configured to send the sensing signal, and the fifth response message and the eighth response message include the spectrum resource carrying the sensing signal.

In a possible design, the fifth request message includes at least one of the following information: a sensing service identifier, a sensing area, sensing data requirement information, and sensing entity requirement information; the sensing service identifier indicates a sensing service; the sensing area indicates a sensing range of the second sensing entity; the sensing data requirement information indicates a sensing data requirement of the sensing service; and the sensing entity requirement information indicates a sensing entity type of the second sensing entity, where the sensing entity type includes a sending sensing entity and/or a receiving sensing entity.

For still another example, an embodiment of this application may provide a communication apparatus configured to implement a function of the foregoing second UPF network element. The communication apparatus may be a communication device that is deployed with or carries the second UPF network element, or may be an apparatus (for example, a chip or a software module) in the communication device that is deployed with or carries the second UPF network element. The communication apparatus may include a receiving unit and a sending unit.

The receiving unit is configured to receive first sensing data from a second access network element, where the first sensing data is obtained by the second access network element based on a received sensing signal; and the sending unit is configured to send the first sensing data to a first user plane function.

The first user plane function network element belongs to a first operator network, and the second access network element and the second user plane function network element belong to a second operator network.

In a possible design, a message carrying the first sensing data indicates or carries first indication information, where the first indication information indicates that the sensing data needs to be transmitted to a first sensing data processing function network element, and the first sensing data processing function network element belongs to the first operator network.

For still another example, an embodiment of this application may provide a communication apparatus configured to implement a function of the foregoing first UPF network element. The communication apparatus may be a communication device that is deployed with or carries the first UPF network element, or may be an apparatus (for example, a chip or a software module) in the communication device that is deployed with or carries the first UPF network element. The communication apparatus may include a receiving unit and a sending unit.

The receiving unit is configured to receive first sensing data sent by a second user plane function, where the first sensing data is obtained by a second access network element based on a received sensing signal; and the sending unit is configured to send the first sensing data to a first sensing data processing function network element.

The first user plane function network element and the first sensing data processing function network element belong to a first operator network, and the second access network element and the second user plane function network element belong to a second operator network.

In a possible design, a message carrying the first sensing data indicates or carries first indication information, where the first indication information indicates that the sensing data needs to be transmitted to the first sensing data processing function network element.

For still another example, an embodiment of this application may provide a communication apparatus configured to implement a function of the foregoing first NRF network element. The communication apparatus may be a communication device that is deployed with or carries the first NRF network element, or may be an apparatus (for example, a chip or a software module) in the communication device that is deployed with or carries the first NRF network element. The communication apparatus may include a receiving unit and a sending unit.

The receiving unit is configured to receive a seventh request message from a first sensing service control function, where the seventh request message indicates to request to obtain fully qualified domain name information of a second sensing service control function network element; and the sending unit is configured to send a ninth request message to a second network repository function network element, where the ninth request message indicates to request the fully qualified domain name information of the second sensing service control function network element.

The receiving unit is further configured to receive a ninth response message from the second network repository function network element, where the ninth response message indicates the fully qualified domain name information of the second sensing service control function network element; and the sending unit is further configured to send a seventh response message to the first sensing service control function, where the seventh response message indicates the fully qualified domain name information of the second sensing service control function network element.

The first network repository function network element and the first sensing service control function belong to a first operator network, and the second network repository function network element and the second sensing service control function belong to a second operator network.

For still another example, an embodiment of this application may provide a communication apparatus configured to implement a function of the foregoing second NRF network element. The communication apparatus may be a communication device that is deployed with or carries the second NRF network element, or may be an apparatus (for example, a chip or a software module) in the communication device that is deployed with or carries the second NRF network element. The communication apparatus may include a receiving unit and a sending unit.

The receiving unit is configured to receive a ninth request message from a first network repository function network element, where the ninth request message indicates to request to obtain fully qualified domain name information of a second sensing service control function network element; and the sending unit is configured to send a ninth response message to the first network repository function network element, where the ninth response message indicates the fully qualified domain name information of the second sensing service control function network element.

The first network repository function network belongs to a first operator network, and the second network repository function network element and the second sensing service control function belong to a second operator network.

For still another example, an embodiment of this application may provide a communication apparatus configured to implement a function of the foregoing first SSCF network element. The communication apparatus may be a communication device that is deployed with or carries the first SSCF network element, or may be an apparatus (for example, a chip or a software module) in the communication device that is deployed with or carries the first SSCF network element. The communication apparatus may include a receiving unit and a sending unit.

The receiving unit is configured to receive a sixth request message from a second sensing service control function network element, where the sixth request message indicates to request to establish a first sensing bearer between a first sensing data processing function network element and a second sensing data processing function network element; and the sending unit is configured to send a first request message to the first sensing data processing function network element, where the first request message indicates to request to establish the first sensing bearer.

The receiving unit is further configured to receive a first response message from the first sensing data processing function network element, where the first response message indicates that establishment of the first sensing bearer is acknowledged; and the sending unit is further configured to send a sixth response message to the second sensing service control function network element, where the sixth response message indicates that establishment of the first sensing bearer is acknowledged.

The first sensing bearer is used by the second sensing data processing function network element to send sensing data to the first sensing data processing function network element, the first sensing service control function network element and the first sensing data processing function network element belong to a first operator network, and the second sensing service control function network element and the second sensing data processing function network element belong to a second operator network.

For still another example, an embodiment of this application may provide a communication apparatus configured to implement a function of the foregoing second SSCF network element. The communication apparatus may be a communication device that is deployed with or carries the second SSCF network element, or may be an apparatus (for example, a chip or a software module) in the communication device that is deployed with or carries the second SSCF network element. The communication apparatus may include a sending unit and a receiving unit.

The sending unit is configured to send a sixth request message to a first sensing service control function network element, where the sixth request message indicates to request to establish a first sensing bearer between a first sensing data processing function network element and a second sensing data processing function network element; and the receiving unit is configured to receive a sixth response message from the first sensing service control function network element, where the sixth response message indicates that establishment of the first sensing bearer is acknowledged.

The first sensing bearer is used by the second sensing data processing function network element to send sensing data to the first sensing data processing function network element, the first sensing service control function network element and the first sensing data processing function network element belong to a first operator network, and the second sensing service control function network element and the second sensing data processing function network element belong to a second operator network.

In a possible design, the sending unit is further configured to send a second request message to the second sensing data processing function network element, where the second request message indicates to request to establish the first sensing bearer; and the receiving unit is further configured to receive a second response message from the second sensing data processing function network element, where the second response message indicates that establishment of the first sensing bearer is acknowledged.

The sending unit is further configured to send a third request message to the second sensing data processing function network element, where the third request message indicates to request to modify the first sensing bearer; and the receiving unit is further configured to receive a third response message from the second sensing data processing function network element, where the third response message indicates that modification of the first sensing bearer is acknowledged.

It should be understood that division into the units of the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuits, ASICs), one or more digital signal processing (digital signal processing, DSP) circuits, one or more field programmable gate arrays (field programmable gate arrays, FPGAs), or a combination of at least two of these integrated circuit forms.

For another example, when a unit in the apparatus may be implemented in a form in which a processing element schedules a program, the processing element may be a general-purpose processor, for example, a CPU or another processor that can invoke a program. For still another example, the units may be integrated and implemented in a form of a system-on-a-chip (system-on-a-chip, SOC).

The foregoing receiving unit is an interface circuit or an input circuit of the apparatus, and is configured to receive a signal from another apparatus. For example, when the apparatus is implemented in a form of a chip, the receiving unit is an interface circuit or an input circuit used by the chip to receive a signal from another chip or apparatus. When the communication apparatus includes a sending unit, the sending unit is an interface circuit or an output circuit of the apparatus, and is configured to send a signal to another apparatus. For example, when the apparatus is implemented in a form of a chip, the sending unit is an interface circuit or an output circuit used by the chip to send a signal to another chip or apparatus.

For example, an embodiment of this application may further provide a communication apparatus. The communication apparatus may include a processor and an interface circuit. There may be one or more processors. When the communication apparatus is used in any one of the foregoing network elements, for example, the first SDPF network element, the second SDPF network element, the first SSCF network element, the second SSCF network element, the first UPF network element, or the second UPF network element, the processor is configured to communicate with another apparatus through an interface circuit, and perform steps performed by the corresponding network element in the foregoing methods.

In an implementation, units that are of the foregoing network elements (for example, the first SDPF network element, the second SDPF network element, the first SSCF network element, the second SSCF network element, the first UPF network element, and the second UPF network element) and implement corresponding steps in the foregoing methods may be implemented in a form in which a processing element schedules a program. For example, an apparatus used in an SSCF network element may include a processing element and a storage element, and the processing element invokes a program stored in the storage element, to perform the method performed by the corresponding SSCF network element in the foregoing method embodiments. The storage element may be a storage element located on a same chip as the processing element, namely, an on-chip storage element.

In another implementation, a program used to perform the method performed by each network element (for example, the first SDPF network element, the second SDPF network element, the first SSCF network element, the second SSCF network element, the first UPF network element, or the second UPF network element) in the foregoing methods may be stored in a storage element that is on a chip different from that of the processing element, namely, an off-chip storage element. In this case, the processing element invokes a program from the off-chip storage element or loads the program to the on-chip storage element, to invoke and perform the method performed by each corresponding network element (for example, the first SDPF network element, the second SDPF network element, the first SSCF network element, the second SSCF network element, the first UPF network element, or the second UPF network element) in the foregoing method embodiments.

For example, an embodiment of this application may further provide a communication apparatus. The communication apparatus may include a processor, configured to execute computer instructions stored in a memory. When the computer instructions are executed, the apparatus is caused to perform the methods performed by the foregoing network elements (for example, the first SDPF network element, the second SDPF network element, the first SSCF network element, the second SSCF network element, the first UPF network element, and the second UPF network element). The memory may be located inside or outside the communication apparatus. In addition, there are one or more processors.

In still another implementation, units that are of each network element (for example, the first SDPF network element, the second SDPF network element, the first SSCF network element, the second SSCF network element, the first UPF network element, or the second UPF network element) and implement steps in the foregoing methods may be configured as one or more processing elements, where the processing elements may be correspondingly disposed on each network element. The processing element may be an integrated circuit, for example, one or more ASICs, one or more DSPs, one or more FPGAs, or a combination of these types of integrated circuits. These integrated circuits may be integrated together to form a chip.

Units that are of each network element (for example, the SSCF network element, a second network element, a first network element, the UPF network element, or the DCP network element) and implement steps in the foregoing methods may be integrated together and implemented in a form of an SOC. The SOC chip is configured to implement a corresponding method. At least one processing element and a storage element may be integrated into the chip, and the processing element invokes a program stored in the storage element to implement a corresponding method. Alternatively, at least one integrated circuit may be integrated into the chip, to implement a corresponding method. Alternatively, with reference to the foregoing implementations, functions of some units may be implemented by invoking a program by the processing element, and functions of some units may be implemented by the integrated circuit.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits.

The storage element may be one memory, or may be a general term of multiple storage elements.

For example, an embodiment of this application further provides a chip system. The chip system may be used in the foregoing network elements (for example, the first SDPF network element, the second SDPF network element, the first SSCF network element, the second SSCF network element, the first UPF network element, and the second UPF network element). The chip system includes one or more interface circuits and one or more processors. The interface circuit and the processor are interconnected through a line. The processor receives computer instructions from a memory of an electronic device through the interface circuit, and executes the computer instructions, to implement the methods performed by the corresponding network elements (for example, the first SDPF network element, the second SDPF network element, the first SSCF network element, the second SSCF network element, the first UPF network element, and the second UPF network element) in the foregoing method embodiments. The electronic device may be a communication device that carries or is deployed with each network element, or a device in the communication device that carries or is deployed with each network element, or may be another device that communicates with the communication device that carries or is deployed with each network element.

Based on the foregoing descriptions of the implementations, a person skilled in the art may clearly understand that, for the purpose of convenient and brief description, the foregoing functional module division is taken as an example for illustration. During actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the module or unit division is merely logical function division and may be other division during actual implementation. For example, multiple units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product, for example, a program. The software product is stored in a program product, for example, a computer-readable storage medium, and includes several instructions for instructing a device (which may be a single chip microcomputer, a chip, or the like) or a processor (processor) to perform all or some of the steps in the method in each embodiment of this application. The foregoing storage medium includes any medium that can store program code, for example, a USB flash drive, a removable hard disk, a ROM, a RAM, a magnetic disk, or an optical disc.

For example, an embodiment of this application may further provide a computer-readable storage medium, including computer software instructions. When the computer software instructions are run, steps performed by each network element (for example, the first SDPF network element, the second SDPF network element, the first SSCF network element, the second SSCF network element, the first UPF network element, or the second UPF network element) in the methods in the foregoing embodiments are implemented.

For example, when the computer software instructions are run in a communication device that is deployed with or carries a network element (for example, the first SDPF network element, the second SDPF network element, the first SSCF network element, the second SSCF network element, the first UPF network element, or the second UPF network element), or the computer software instructions are run in an apparatus (for example, a chip) built in the communication device that is deployed with or carries the network element (for example, the first SDPF network element, the second SDPF network element, the first SSCF network element, the second SSCF network element, the first UPF network element, or the second UPF network element), the communication device that is deployed with or carries the network element is caused to implement steps performed by the network element in the foregoing embodiments.

Optionally, an embodiment of this application further provides a communication apparatus. The communication apparatus may include a transceiver unit and a processing unit. The transceiver unit may be configured to receive and send information, or configured to communicate with another network element. The processing unit may be configured to process data. For example, the apparatus may implement, by using the transceiver unit and the processing unit, the methods performed by the foregoing network elements (for example, the first SDPF network element, the second SDPF network element, the first SSCF network element, the second SSCF network element, the first UPF network element, and the second UPF network element).

Optionally, an embodiment of this application further provides a computer program product. When the computer program product is executed, the methods performed by the foregoing network elements (for example, the first SDPF network element, the second SDPF network element, the first SSCF network element, the second SSCF network element, the first UPF network element, and the second UPF network element) may be implemented.

Based on the foregoing embodiments, an embodiment of this application further provides a communication system, including one or more of the network elements in the foregoing embodiments, for example, the first SDPF network element, the second SDPF network element, the first SSCF network element, the second SSCF network element, the first UPF network element, and the second UPF network element. Each network element may perform steps correspondingly performed by the network element in the methods in the foregoing embodiments.

For example, an embodiment of this application further provides a communication device, which may be configured to implement the methods performed by the network elements (for example, the first SDPF network element, the second SDPF network element, the first SSCF network element, the second SSCF network element, the first UPF network element, and the second UPF network element) in the foregoing embodiments.

It should be understood that descriptions of technical features, technical solutions, beneficial effects, or similar languages in this application do not imply that all features and advantages can be implemented in any single embodiment. On the contrary, it may be understood that descriptions of features or beneficial effects indicate that at least one embodiment includes specific technical features, technical solutions, or beneficial effects. Therefore, descriptions of technical features, technical solutions, or beneficial effects in this specification do not necessarily refer to a same embodiment. Further, the technical features, technical solutions, and beneficial effects described in embodiments may be combined in any proper manner. A person skilled in the art may understand that an embodiment may be implemented without one or more specific technical features or technical solutions, or beneficial effect in a specific embodiment. In other embodiments, additional technical features and beneficial effects may also be identified in specific embodiments that do not reflect all embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method is applied to a first sensing data processing function network element side, and the method comprises:
obtaining sensing data, wherein the sensing data comprises first sensing data and/or second sensing data, wherein
the first sensing data is obtained based on a sensing signal received by a second access network element; and
the second sensing data is from a first access network element, and the second sensing data is obtained based on a sensing signal sent by the second access network element; and
processing the sensing data, wherein
the first access network element and the first sensing data processing function network element belong to a first operator network, and the second access network element belongs to a second operator network.

2. The method according to claim 1, wherein the obtaining the first sensing data comprises:
receiving the first sensing data sent by a second sensing data processing function network element, wherein the first sensing data is transmitted through a first sensing bearer between the first sensing data processing function network element and the second sensing data processing function network element; and
the second sensing data processing function network element belongs to the second operator network.

3. The method according to claim 2, wherein the method further comprises:
receiving a first request message from a first sensing service control function network element, wherein the first request message indicates to request to establish the first sensing bearer; and
sending a first response message to the first sensing service control function network element, wherein the first response message indicates that establishment of the first sensing bearer is acknowledged; and
the first sensing service control function network element belongs to the first operator network.

4. The method according to claim 1, wherein the obtaining the first sensing data comprises:
receiving the first sensing data sent by a first user plane function network element, wherein
the first sensing data is sent by a second user plane function network element to the first user plane function network element, the first user plane function network element belongs to the first operator network, and the second user plane function network element belongs to the second operator network.

5. A communication method, wherein the method is applied to a second sensing data processing function network element side, and the method comprises:
receiving first sensing data from a second access network element, wherein the first sensing data is obtained by the second access network element based on a received sensing signal; and
sending the first sensing data to a first sensing data processing function network element,
wherein
the first sensing data processing function network element belongs to a first operator network, and the second access network element and the second sensing data processing function network element belong to a second operator network.

6. A communication method, wherein the method is applied to a first sensing service control function network element side, and the method comprises:
sending a fourth request message to a first access network element, wherein the fourth request message indicates the first access network element to serve as a first sensing entity;
receiving a fourth response message from the first access network element, wherein the fourth response message indicates that the first access network element is acknowledged as the first sensing entity;
sending a fifth request message to a second sensing service control function network element, wherein the fifth request message indicates to request a second operator network to provide an access network element as a second sensing entity for a first operator network; and
receiving a fifth response message from the second sensing service control function network element, wherein the fifth response message indicates that a second access network element is provided as the second sensing entity of the first operator network, wherein
the first sensing entity and the second sensing entity are configured to obtain sensing data, the first access network element and the first sensing service control function network element belong to the first operator network, and the second access network element and the second sensing service control function network element belong to the second operator network.

7. The method according to claim 6, wherein the second sensing entity is configured to receive a sensing signal, and the method further comprises:
receiving a sixth request message from the second sensing service control function network element, wherein the sixth request message indicates to request to establish a first sensing bearer between a first sensing data processing function network element and a second sensing data processing function network element;
sending a first request message to the first sensing data processing function network element, wherein the first request message indicates to request to establish the first sensing bearer;
receiving a first response message from the first sensing data processing function network element, wherein the first response message indicates that establishment of the first sensing bearer is acknowledged; and
sending a sixth response message to the second sensing service control function network element, wherein the sixth response message indicates that establishment of the first sensing bearer is acknowledged, wherein
the first sensing bearer is used by the second sensing data processing function network element to send the sensing data to the first sensing data processing function network element, the second sensing data processing function network element belongs to the second operator network, and the first sensing data processing function network element belongs to the first operator network.

8. The method according to claim 6 or 7, wherein the second sensing entity is configured to send the sensing signal, and the method further comprises:
sending a second sensing request message to the second sensing service control function network element, wherein the second sensing request message indicates the second access network element to perform sensing.

9. The method according to claim 6 or 7, wherein the first sensing entity is configured to send the sensing signal, and the second sensing entity is configured to receive the sensing signal; and
the fourth response message and the fifth request message comprise a spectrum resource carrying the sensing signal.

10. The method according to claim 6, wherein the second sensing entity is configured to send a sensing signal, and the first sensing entity is configured to receive the sensing signal; and
the fourth request message and the fifth response message comprise a spectrum resource carrying the sensing signal.

11. The method according to any one of claims 6 to 10, wherein the fifth request message comprises at least one of the following information: a sensing service identifier, a sensing area, sensing data requirement information, and sensing entity requirement information;
the sensing service identifier indicates a sensing service;
the sensing area indicates a sensing range of the second sensing entity;
the sensing data requirement information indicates a sensing data requirement of the sensing service; and
the sensing entity requirement information indicates a sensing entity type of the second sensing entity, wherein the sensing entity type comprises a sending sensing entity and/or a receiving sensing entity.

12. The method according to any one of claims 6 to 11, wherein the sending the fifth request message to the second sensing service control function network element comprises:
when available sensing entity resources in the first operator network are insufficient, sending the fifth request message to the second sensing service control function network element.

13. A communication method, wherein the method is applied to a second sensing service control function network element side, and the method comprises:
receiving a fifth request message from a first sensing service control function network element, wherein the fifth request message indicates to request a second operator network to provide an access network element as a second sensing entity for a first operator network;
sending an eighth request message to a second access network element, wherein the eighth request message indicates the second access network element to serve as the second sensing entity of the first operator network;
receiving an eighth response message from the second access network element, wherein the eighth response message indicates that the second access network element is acknowledged as the second sensing entity of the first operator network; and
sending a fifth response message to the first sensing service control function network element, wherein the fifth response message indicates that the second access network element is provided as the second sensing entity of the first operator network, wherein
the second sensing entity is configured to obtain sensing data, the first sensing service control function network element belongs to the first operator network, and the second access network element and the second sensing service control function network element belong to the second operator network.

14. A communication method, wherein the method is applied to a first sensing service control function network element side, and the method comprises:
receiving a sixth request message from a second sensing service control function network element, wherein the sixth request message indicates to request to establish a first sensing bearer between a first sensing data processing function network element and a second sensing data processing function network element;
sending a first request message to the first sensing data processing function network element, wherein the first request message indicates to request to establish the first sensing bearer;
receiving a first response message from the first sensing data processing function network element, wherein the first response message indicates that establishment of the first sensing bearer is acknowledged; and
sending a sixth response message to the second sensing service control function network element, wherein the sixth response message indicates that establishment of the first sensing bearer is acknowledged, wherein
the first sensing bearer is used by the second sensing data processing function network element to send sensing data to the first sensing data processing function network element, the first sensing service control function network element and the first sensing data processing function network element belong to a first operator network, and the second sensing service control function network element and the second sensing data processing function network element belong to a second operator network.

15. A communication method, wherein the method is applied to a second sensing service control function network element side, and the method comprises:
sending a sixth request message to a first sensing service control function network element, wherein the sixth request message indicates to request to establish a first sensing bearer between a first sensing data processing function network element and a second sensing data processing function network element; and
receiving a sixth response message from the first sensing service control function network element, wherein the sixth response message indicates that establishment of the first sensing bearer is acknowledged, wherein
the first sensing bearer is used by the second sensing data processing function network element to send sensing data to the first sensing data processing function network element, the first sensing service control function network element and the first sensing data processing function network element belong to a first operator network, and the second sensing service control function network element and the second sensing data processing function network element belong to a second operator network.

16. The method according to claim 15, wherein the method further comprises:
sending a second request message to the second sensing data processing function network element, wherein the second request message indicates to request to establish the first sensing bearer;
receiving a second response message from the second sensing data processing function network element, wherein the second response message indicates that establishment of the first sensing bearer is acknowledged;
sending a third request message to the second sensing data processing function network element, wherein the third request message indicates to request to modify the first sensing bearer; and
receiving a third response message from the second sensing data processing function network element, wherein the third response message indicates that modification of the first sensing bearer is acknowledged.

17. A communication apparatus, wherein the communication apparatus comprises a module configured to perform the method according to any one of claims 1 to 16.

18. A communication apparatus, wherein the apparatus comprises: a processor, configured to execute computer instructions stored in a memory, and when the computer instructions are executed, the apparatus is caused to perform the method according to any one of claims 1 to 16.

19. A communication apparatus, wherein the apparatus comprises a processor and an interface circuit, and the processor is configured to communicate with another apparatus through the interface circuit, and perform the method according to any one of claims 1 to 16.

20. A computer-readable storage medium, wherein the computer-readable storage medium comprises instructions, and when the instructions are run, the method according to any one of claims 1 to 16 is implemented.

21. A computer program product, wherein when the computer program product is executed, the method according to any one of claims 1 to 16 is implemented.
